(19) Europäisches Patentamt / European Patent Office / Office européen des brevets

(11) **EP 4 773 076 A1**

(12) **EUROPEAN PATENT APPLICATION**
published in accordance with Art. 153(4) EPC

(43) Date of publication:
08.07.2026 Bulletin 2026/28

(21) Application number: 24906039.3

(22) Date of filing: 29.11.2024

(51) International Patent Classification (IPC):
*G06T 7/00* (2017.01)

(52) Cooperative Patent Classification (CPC):
G01N 21/88; G06T 7/00; G06T 7/20; Y02P 10/25

(86) International application number:
PCT/CN2024/135542

(87) International publication number:
WO 2025/130554 (26.06.2025 Gazette 2025/26)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 19.12.2023 CN 202311764353

(71) Applicant: Guangzhou Diligine Photonics Co.,
Ltd.
Guangzhou, Guangdong 510000 (CN)

(72) Inventors:
- YUAN, Peng
  Guangzhou, Guangdong 510000 (CN)
- WANG, Minglang
  Guangzhou, Guangdong 510000 (CN)
- WANG, Lin
  Guangzhou, Guangdong 510000 (CN)
- BAI, Tianxiang
  Guangzhou, Guangdong 510000 (CN)
- YOU, Deyong
  Guangzhou, Guangdong 510000 (CN)

(74) Representative: Petraz, Gilberto Luigi et al
GLP S.r.l.
Viale Europa Unita, 171
33100 Udine (IT)

(54) **ADDITIVE MANUFACTURING QUALITY INSPECTION METHOD AND RELATED DEVICE**

(57)  An embodiment of the present disclosure discloses an additive manufacturing quality inspection method and a related device. The method includes the following. An IPC acquires electrical signals corresponding to optical signals during a first period in a laser additive manufacturing process; the IPC constructs at least two trajectory amplitude maps respectively based on at least two electrical signals corresponding to the at least two optical signals; the IPC partitions the at least two trajectory amplitude maps separately to obtain multiple image block sets; the IPC determines, based on electrical signal amplitudes of image blocks in each image block set, whether a region in a target slice layer corresponding to the image blocks in each image block set has a defect. This facilitates inspecting abnormal regions in a slice layer of a part during additive processing.

IPC ACQUIRES ELECTRICAL SIGNALS CORRESPONDING TO OPTICAL SIGNALS DURING A FIRST PERIOD IN A LASER ADDITIVE MANUFACTURING PROCESS — S201

IPC CONSTRUCTS AT LEAST TWO TRAJECTORY AMPLITUDE MAPS RESPECTIVELY BASED ON AT LEAST TWO ELECTRICAL SIGNALS CORRESPONDING TO THE AT LEAST TWO OPTICAL SIGNALS — S202

IPC PARTITIONS THE AT LEAST TWO TRAJECTORY AMPLITUDE MAPS SEPARATELY TO OBTAIN MULTIPLE FIRST IMAGE BLOCKS; IPC PERFORMS BLOCK PARTITIONING ON EACH OF MULTIPLE FIRST IMAGE BLOCKS SEPARATELY TO OBTAIN MULTIPLE IMAGE BLOCK SETS — S203

IPC DETERMINES, BASED ON ELECTRICAL SIGNAL AMPLITUDES OF THE SECOND IMAGE BLOCKS IN EACH IMAGE BLOCK SET, WHETHER A REGION CORRESPONDING TO THE SECOND IMAGE BLOCKS IN EACH IMAGE BLOCK SET IN THE TARGET SLICE LAYER IN THE TARGET SLICE LAYER HAS A DEFECT — S204

FIG. 2

EP 4 773 076 A1

# EP 4 773 076 A1

## Description

This application claims priority to Chinese Patent Application No. 202311764353.4, filed with the China National Intellectual Property Administration on December 19, 2023, entitled "Additive Manufacturing Quality Inspection Method and Related Device", the entire disclosure of which is incorporated herein by reference.

TECHNICAL FIELD

This disclosure relates to the field of additive manufacturing technology, and in particular, to an additive manufacturing quality inspection method and a related device.

BACKGROUND

Additive manufacturing, also known as 3D printing manufacturing, mainly involves melting metal raw materials by focusing thermal energy from a laser, and then processing materials such as powder layer by layer to form a desired workpiece. Laser additive manufacturing is a metal additive manufacturing process. Compared with processing methods such as parts assembly and metal cutting in traditional industries, laser additive manufacturing offers higher efficiency and greater flexibility. It can be used for rapid prototyping, manufacturing functionally graded materials, and repairing high-value-added components, etc. Currently, this technology is increasingly applied in the aerospace, defense, automotive, and biomedical industries. During the laser additive manufacturing process, factors such as different laser processing parameters, environment, and equipment can lead to poor surface accuracy of the formed workpiece. The generation of defects and dimensional accuracy have consistently hindered the further popularization and application of this technology. Therefore, research on online monitoring technology for the additive manufacturing process is a necessary means and quality assurance for controlling the overall additive manufacturing process.

Existing online inspection methods for laser additive processing generally include the following two types: offline inspection and online inspection.

In offline inspection methods, surface inspection equipment such as microscopes and scanning electron microscopes are mainly used to complete surface inspection, making it difficult to inspect internal defects of the component. Destructive measurement methods like industrial metallographic sectioning damage the original morphology of the component and have low efficiency. Methods such as industrial CT scanning and ultrasonic testing can obtain internal information of the workpiece for defect inspection, but such methods can only be performed after the part is manufactured, constituting offline inspection, being unable to achieve online inspection, which makes it difficult to integrate manufacturing and inspection, thus affecting production efficiency.

In online inspection methods, for example, the existing Chinese patent (CN115861187A) for laser additive manufacturing, through a schematic diagram of the online monitoring system for laser deposition additive manufacturing of that application, uses methods such as photography, scanning, and infrared sensing to melt and deposit powder or wire materials in combination with a digital model. Three types of data: molten pool image data, molten pool temperature data, and three-dimensional point cloud data are used for matching. Specifically, high-speed cameras, infrared cameras, laser three-dimensional scanners, etc., are used to obtain online inspection information. For example, a high-speed camera is used to collect molten pool image data; an infrared camera is used to collect molten pool temperature data; a laser three-dimensional scanner is used to collect three-dimensional point cloud data of the workpiece shape.

Offline inspection methods not only damage the workpiece structure but also easily cause deformation of the workpiece due to destructive detecting, affecting the final measurement results. Online inspection methods are costly.

SUMMARY

The present disclosure proposes an additive manufacturing quality inspection method and a related device, which facilitate the inspection of abnormal regions in a slice layer of a part during the additive processing.

The present disclosure adopts the following technical solutions.

In a first aspect, an embodiment of the present disclosure provides an additive manufacturing quality inspection method. The method includes the following. An industrial PC (IPC) acquires electrical signals corresponding to optical signals during a first period in a laser additive manufacturing process, wherein the first period is a period during which a target slice layer of a target part is processed in the laser additive processing, and the optical signals during the first period include at least two of: a laser emission signal from a laser device during the first period, and a laser reflection signal, a visible light signal, and an infrared light signal generated from the target slice layer during the first period. The IPC constructs at least two trajectory amplitude maps respectively based on at least two electrical signals corresponding to the at least two optical signals, wherein a contour of each of the at least two trajectory amplitude maps is identical to a contour of the target slice layer, the trajectory amplitude map includes multiple trajectory amplitude lines, multiple trajectory amplitude lines correspond to processing trajectories during processing of the target slice layer, and an amplitude represented by the trajectory amplitude line is an amplitude of a corresponding electrical signal during the processing of the target slice layer. The IPC partitions the at least two trajectory amplitude maps separately to obtain multiple first image blocks, and performs block partitioning on each of multiple first image blocks separately to obtain multiple image block sets, wherein multiple image block sets correspond to regions in the target slice layer, each image block set of multiple image block sets includes at least two second image blocks, the at least two second image blocks respectively belong to the at least two trajectory amplitude maps, and the at least two second image blocks correspond to a same region in the target slice layer. The IPC determines, based on electrical signal amplitudes of the second image blocks in each image block set, whether the region corresponding to the second image blocks in each image block set in the target slice layer has a defect.

During the process of processing the target slice layer of the target part, at least two of the electrical signal corresponding to the laser emission signal, the electrical signal corresponding to the laser reflection signal, the electrical signal corresponding to the visible light signal, and the electrical signal corresponding to the infrared light signal are acquired; at least two trajectory amplitude maps are constructed respectively based on the acquired at least two of the electrical signal corresponding to the laser emission signal, the electrical signal corresponding to the laser reflection signal, the electrical signal corresponding to the visible light signal, and the electrical signal corresponding to the infrared light signal. By performing block partitioning on the constructed trajectory amplitude maps, the regions with defects, i.e., the abnormal region in the target slice layer, are determined based on the electrical signal amplitudes of the image blocks obtained by block partitioning. This method can inspect abnormal regions in the slice layer of parts during additive processing, without damaging the parts compared with existing technologies, and at a low cost. Since the regions with defects in the target slice layer can be identified, it facilitates subsequent re-processing of the defective region to eliminate the defects.

In combination with the first aspect, in a possible implementation, the IPC determines, based on the electrical signal amplitudes of the second image blocks in each image block set, whether the region corresponding to the second image blocks in each image block set in the target slice layer has a defect as follows.

The IPC determines an inspection result corresponding to each second image block based on the electrical signal amplitude of each second image block in each image block set and an electrical-signal threshold range corresponding to the first image block to which the second image block belongs. The IPC determines whether the region corresponding to the second image blocks in each image block set in the target slice layer has a defect based on the inspection results corresponding to the second image blocks in each image block set.

By determining whether the region corresponding to each image block set in the target slice layer has a defect according to the electrical signal amplitudes of at least two image blocks respectively belonging to at least two trajectory amplitude maps, the accuracy of the determination result can be improved.

In combination with the first aspect, in a possible implementation, when the electrical signal amplitude of each second image block exceeds the electrical-signal threshold range corresponding to the first image block to which the image block belongs, the inspection result corresponding to the second image block is that the region corresponding to the image block in the target slice layer has a defect. When the electrical signal amplitude of each second image block does not exceed the electrical-signal threshold range corresponding to the second image block to which the image block belongs, the inspection result corresponding to the second image block is that the region corresponding to the second image block in the target slice layer has a defect.

In combination with the first aspect, in a possible implementation, the IPC determines the inspection result corresponding to each second image block based on the electrical signal amplitude of each second image block in each image block set as follows.

The IPC determines a ratio for each second image block, wherein the ratio for each second image block is a ratio of the electrical signal amplitude of the second image block to the electrical signal amplitude of the first image block to which the second image block belongs. When the ratio for each second image block exceeds an electrical-signal ratio range corresponding to the first image block to which the second image block belongs, the inspection result corresponding to the second image block is that the region corresponding to the second image block in the target slice layer has a defect. When the ratio for each image block does not exceed the electrical-signal ratio range corresponding to the first image block set to which the second image block belongs, the inspection result corresponding to the second image block is that the region corresponding to the second image block in the target slice layer has no defects.

In combination with the first aspect, in a possible implementation, the IPC determines whether the region corresponding to the second image blocks in each image block set in the target slice layer has a defect based on the inspection results corresponding to the second image blocks in each image block set as follows.

When inspection results corresponding to all second image blocks in a target image block set indicate that the region corresponding to the second image blocks in the target slice layer have a defect, then the IPC determines that the region corresponding to the second image blocks in the target image block set in the target slice layer has a defect. The target image block set is one of multiple image block sets.

Only when the inspection results corresponding to all second image blocks in the target image block set indicate that the region corresponding to the image blocks in the target slice layer has a defect does the IPC determine that the region corresponding to the second image blocks in the target image block set in the target slice layer has a defect. In this way, the accuracy of determining whether the region corresponding to the second image blocks in the target image block set in the target slice layer has a defect can be improved.

In combination with the first aspect, in a possible implementation, the IPC determines whether the region corresponding to the second image blocks in each image block set in the target slice layer has a defect based on the inspection results corresponding to the second image blocks in each image block set as follows.

In a target image block set, when there are multiple image blocks whose inspection results indicate that the corresponding region in the target slice layer has a defect, if multiple second image blocks include a second image block with a priority higher than a preset priority, then the IPC determines that the region corresponding to the second image blocks in the target image block set in the target slice layer has a defect, wherein the target image block set is one of multiple image block sets. If multiple second image blocks do not include a second image block with a priority higher than the preset priority, when the number of multiple second image blocks is greater than a preset number, the IPC determines that the region corresponding to the second image blocks in the target image block set in the target slice layer has a defect.

By means of the above-described method, the accuracy of determining whether the region corresponding to the second image blocks in the target image block set in the target slice layer has a defect can be improved.

In combination with the first aspect, in a possible implementation, a second image block A has a higher priority than a second image block B, the second image block B has a higher priority than a second image block C, and the second image block C has a higher priority than a second image block D. The second image block A belongs to a trajectory amplitude map constructed based on an electrical signal corresponding to the laser emission signal from the laser device; the second image block B belongs to a trajectory amplitude map constructed based on an electrical signal corresponding to the infrared light signal; the second image block C belongs to a trajectory amplitude map constructed based on an electrical signal corresponding to the visible light signal; the second image block D belongs to a trajectory amplitude map constructed based on an electrical signal corresponding to the laser reflection signal.

In combination with the first aspect, in a possible implementation, the method of this embodiment further includes the following. The IPC acquires one or more of: position information of an abnormal region in the target slice layer, a ratio of an area of the abnormal region in the target slice layer to an area of the target slice layer, a ratio of a total area of all abnormal regions from a first layer to the target slice layer to a total area of all slice layers from the first layer to the target slice layer, and position information corresponding to a target group. The target group is a group for which a number of pieces of position information is greater than a preset number, the target group is obtained by grouping position information of all abnormal regions from the first layer to the target slice layer, and position information within a same group indicates a same position. The IPC transmits to a laser processing system one or more of: the position information of the abnormal region in the target slice layer, the ratio of the area of the abnormal region in the target slice layer to the area of the target slice layer, the ratio of the total area of all abnormal regions from the first layer to the target slice layer to the total area of all slice layers from the first layer to the target slice layer, and the position information corresponding to the target group, to enable the laser processing system to re-process the abnormal region in the target slice layer based on one or more of the position information of the abnormal region in the target slice layer, the ratio of the area of the abnormal region in the target slice layer to the area of the target slice layer, and the ratio of the total area of all abnormal regions from the first layer to the target slice layer to the total area of all slice layers from the first layer to the target slice layer, and to enable the laser processing system to adjust a parameter of the laser processing system based on the position information corresponding to the target group.

In combination with the first aspect, in a possible implementation, the method of this embodiment further includes the following.

The IPC acquires a ratio of an area of an abnormal region in the target slice layer to an area of the target slice layer. When the ratio of the area of the abnormal region in the target slice layer to the area of the target slice layer is greater than a first preset ratio, the IPC transmits position information of the abnormal region in the target slice layer to a laser processing system, to enable the laser processing system to re-process the abnormal region in the target slice layer based on the position information of the abnormal region in the target slice layer;

Alternatively, the IPC acquires position information of all abnormal regions from a first layer to the target slice layer, and groups all the position information of the abnormal regions, position information within a same group indicating a same position. The IPC transmits position information corresponding to a target group to the laser processing system, to enable the laser processing system to adjust a parameter of the laser processing system based on the target position information, wherein the target group is a group for which the number of pieces of position information is greater than a preset number.

Alternatively, the IPC acquires a ratio of a total area of all abnormal regions from the first layer to the target slice layer to a total area of all slice layers from the first layer to the target slice layer. If the ratio of the total area of all abnormal regions from the first layer to the target slice layer to the total area of all slice layers from the first layer to the target slice layer is greater than a second preset ratio, and the ratio of the area of the abnormal region in the target slice layer to the area of the target slice layer is not greater than the first preset ratio, then the IPC transmits position information of all abnormal regions in the target slice layer to the laser processing system, to enable the laser processing system to re-process the abnormal regions in the target slice layer based on the position information of the abnormal regions in the target slice layer.

In combination with the first aspect, in a possible implementation, the electrical signal amplitude of the second image block is an average electrical signal amplitude of the second image block, or is obtained by weighting electrical signal amplitudes of all points in the second image block.

In combination with the first aspect, in a possible implementation, the IPC constructs at least two trajectory amplitude maps respectively based on at least two electrical signals corresponding to the at least two optical signals as follows.

The IPC acquires start and end coordinates, a laser processing speed, and a sampling rate for each trajectory line in a target trajectory amplitude map. The target trajectory amplitude map is one of the at least two trajectory amplitude maps. The IPC calculates a first number of additive manufacturing points for each trajectory line based on the start and end coordinates, the laser printing speed, and the sampling rate for the trajectory line. The IPC acquires a second number of additive manufacturing points for each trajectory line based on a target electrical signal. The target electrical signal is an electrical signal corresponding to the target trajectory amplitude map. For a target trajectory line in the target trajectory amplitude map, if a ratio of an absolute value of a difference between the second number of additive manufacturing points for the target trajectory line and the first number of additive manufacturing points for the target trajectory line to the first number of additive manufacturing points does not exceed a preset ratio, then the target trajectory line is retained; if it exceeds, the target trajectory line is deleted.

By means of the above-described method, abnormal trajectory lines in the trajectory amplitude map are eliminated, and then the target slice layer is judged to have defects based on the processed trajectory amplitude map, which can improve the accuracy of the judgment result.

Further, if the ratio of the absolute value of the difference between the second number of additive manufacturing points for the target trajectory line and the first number of additive manufacturing points for the target trajectory line to the first number of additive manufacturing points for the target trajectory line exceeds the preset ratio, then the IPC deletes the target trajectory as follows.

If the ratio of the absolute value of the difference between the second number of additive manufacturing points for the target trajectory line and the first number of additive manufacturing points for the target trajectory line to the first number of additive manufacturing points for the target trajectory line exceeds the preset ratio, and a ratio of an absolute value of a difference between a second number of additive manufacturing points of a next trajectory adjacent to the target trajectory in processing sequence and a first number of additive manufacturing points of the next trajectory to the first number of additive manufacturing points of the next trajectory line does not exceed the preset ratio, then the IPC deletes the target trajectory.

The accuracy of identifying abnormal trajectory lines can be improved in the above-described manner.

In combination with the first aspect, in a possible implementation, the method of this embodiment further includes the following. The IPC displays at least two trajectory amplitude maps, and displays a result of whether the target slice layer has defects. When the IPC determines that the target slice layer has a defect, it displays the abnormal region in the target slice layer on the at least two trajectory amplitude maps.

By displaying the above-mentioned trajectory amplitude maps and the result of whether there is a defect, it is convenient for the processing personnel to know whether there is a defect in the target slice layer. Furthermore, when there is a defect, it is convenient for the processing personnel to know which specific region in the target slice layer has the defect, facilitating subsequent re-processing.

In a second aspect, an embodiment of the present disclosure provides an IPC, including an acquiring unit, a constructing unit, a display unit, a partitioning unit, a determining unit, and a transmitting unit. The acquiring unit, constructing unit, display unit, partitioning unit, determining unit, and transmitting unit are configured to implement the method provided in any implementation of the first aspect.

In a third aspect, an embodiment of the present disclosure provides an IPC, including a processor, wherein the processor is coupled to a memory, the memory is configured to store a computer program, and the processor is configured to execute the computer program stored in the memory to cause the IPC to perform the method provided in any implementation of the first aspect.

In a fourth aspect, an embodiment of the present disclosure provides a laser processing control system, including a laser welding system, a sensor module, a signal processing module, and an IPC, wherein the IPC is configured to perform the method provided in any implementation of the first aspect.

In a fifth aspect, an embodiment of the present disclosure provides a computer-readable storage medium, the computer-readable storage medium storing a computer program, the computer program causing a computer to perform the method provided in any implementation of the first aspect.

In a sixth aspect, an embodiment of the present disclosure provides a computer program product, the computer program product including a non-transitory computer-readable storage medium storing a computer program, the computer being operable to cause a computer to perform the method according to the first aspect or the second aspect.

It can be understood that the IPCs provided in the second and third aspects, the laser processing control system provided in the fourth aspect, the computer storage medium provided in the fifth aspect, or the computer program product provided in the sixth aspect are all used to implement the method provided in any one implementation of the first aspect. Therefore, the beneficial effects achievable thereby can refer to the beneficial effects in the corresponding method, and will not be repeated herein.

BRIEF DESCRIPTION OF THE DRAWINGS

To explain the technical solutions in the embodiments of the present disclosure or in the related art more clearly, the following briefly introduces the drawings required for use in the embodiments of the present disclosure. Obviously, the drawings in the following description are only some embodiments of the present disclosure. For those of ordinary skill in the art, other drawings can be obtained based on these drawings without creative effort.

FIG. 1 is a schematic structural diagram of an online inspection system for laser additive manufacturing according to an embodiment of the present disclosure.

FIG. 2 is a schematic flowchart of an additive manufacturing quality inspection method according to an embodiment of the present disclosure.

FIG. 3 is a schematic diagram illustrating a relationship between processing trajectories and electrical signals according to an embodiment of the present disclosure.

FIG. 4 is a schematic diagram of a target slice layer and a trajectory amplitude map according to an embodiment of the present disclosure.

FIG. 5a is a schematic diagram illustrating a correspondence between image blocks and regions in a target slice layer according to an embodiment of the present disclosure.

FIG. 5b is a schematic diagram illustrating another correspondence between image blocks and regions in a reference slice layer according to an embodiment of the present disclosure.

FIG. 5c is a schematic diagram of an inspection result according to an embodiment of the present disclosure.

FIG. 6 is a schematic structural diagram of an industrial PC (IPC) according to an embodiment of the present disclosure.

FIG. 7 is a schematic structural diagram of another IPC according to an embodiment of the present disclosure.

DETAILED DESCRIPTION

The technical solutions in the embodiments of the present disclosure will be clearly and completely described below in conjunction with the drawings in the embodiments of the present disclosure. Obviously, the described embodiments are only a part of the embodiments of the present disclosure, not all of the embodiments. Based on the embodiments of the present disclosure, all other embodiments obtained by those of ordinary skill in the art without creative effort fall within the protection scope of the present disclosure.

The terms used in the embodiments of the present disclosure are only for the purpose of describing specific embodiments and are not intended to limit the present disclosure. The singular forms "a," "said," and "the" used in the embodiments of the present disclosure, the description of the drawings, and the claims are also intended to include plural forms, unless the context clearly indicates otherwise. It should be understood that the term "and/or" used herein is merely a description of the association relationship of associated objects, indicating that there may be three relationships, for example, A and/or B may indicate: A alone, A and B simultaneously, and B alone. In addition, the character "/" herein generally indicates that the associated objects before and after are in an "or" relationship. It should be understood that although the terms "first," "second," etc., may be used in the embodiments of the present disclosure, they do not indicate any order, quantity, or importance, but are only used to distinguish different components. Similarly, words such as "one" or "an" do not indicate a quantity limit, but indicate that there is at least one. "Multiple" involved in the embodiments of the present disclosure means greater than or equal to two.

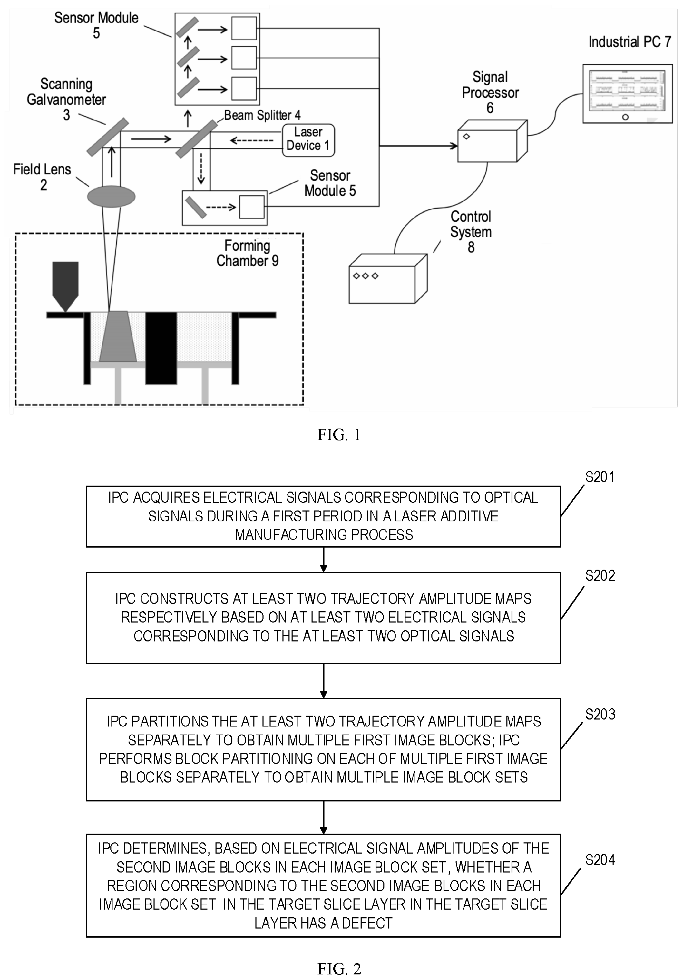

Referring to FIG. 1, FIG. 1 is a schematic structural diagram of an online inspection system for laser additive manufacturing according to an embodiment of the present disclosure. As shown in FIG. 1, the system includes a laser device 1, a field lens 2, a scanning galvanometer 3, a beam splitter 4, a sensor module 5, a signal processor 6, and an industrial PC (IPC) 7. The sensor module 5 is coaxially installed in the scanning galvanometer system of the laser additive manufacturing equipment. The sensor module 5 is connected to the signal processor 6 via a signal line. The signal processor 6 is connected to the IPC 7 via a signal line. The signal processor 6 is connected to a control system 8 of the laser additive manufacturing equipment via a signal line.

In this embodiment, the laser generated by the laser device 1 is first transmitted through the beam splitter 4 to a sensor module for the laser emission signal in the sensor module 5. At the same time, the laser generated by the laser device 1 is also incident into a forming chamber 9 via the scanning galvanometer 3 and the field lens 2. The optical radiation generated during the laser additive manufacturing process is transmitted to the sensor module 5 via the field lens 2, the scanning galvanometer 3, and the beam splitter 4. The sensor module 5 can perform photoelectric conversion and can perform photoelectric conversion on optical radiation signals of multiple wavelengths into electrical signals, including visible light (400-700nm), laser reflection (1060-1070nm), laser emission (1060-1070nm), and infrared light (>1200nm). The electrical signals are transmitted to the signal processor 6 via a signal line. The signal processor 6 performs related processing on the electrical signals, including signal amplification and filtering. After signal processing, the signals are transmitted to the IPC 7 via a signal line. The IPC 7 extracts and processes corresponding characteristic values of the signals, and compares them with preset upper and lower thresholds and upper and lower ratio thresholds, thereby judging the manufacturing quality of each slice layer during the additive manufacturing process. The IPC 7 transmits the corresponding processing information to the control system 8 of the laser additive manufacturing equipment via the signal line and the signal processor 6, thereby adjusting and optimizing the process parameter(s) of additive manufacturing.

Optionally, the sensor module 5 includes at least one of a laser emission signal sensor, a laser reflection signal sensor, a visible light signal sensor, and an infrared light signal sensor.

The wavelength of the laser generated by the laser device 1 is between 1070-1070nm. The sensor module 5 can perform photoelectric conversion, specifically implemented by a silicon photoelectric sensor. The sensor module 5 can perform photoelectric conversion on light of multiple wavelengths, including visible light (400-700nm), laser reflection (1070-1070nm), and infrared light (>1200nm). The signal processor 6 processes the electrical signals, including signal amplification and filtering, to increase the signal amplitude and reduce signal noise. The IPC 7 can further filter the signal, and then determine whether there is an abnormal region in the slice layer of the part based on the collected electrical signals. If there is an abnormal region, the IPC 7 obtains position information of the abnormal region, and transmits the position information of the abnormal region or other information to the control system 8 of the laser additive manufacturing equipment via the signal line and the signal processor 6, so that the control system controls the laser device 1 or a laser processing head or other components controlling laser welding in the laser welding system to re-process the abnormal region.

In laser processing applications, the infrared radiation signal corresponds to an infrared radiation signal in the wavelength range of 1250 nm to 1700 nm. The visible light radiation signal corresponds to a visible light radiation signal in the range of 400 nm to 700 nm. The laser processing reflection signal corresponds to the processing laser reflection signal during actual laser processing, for example, processing laser wavelengths include 915 nm, 1064 nm, 1070 nm, etc. The wavelength of the processing laser is related to the wavelength of the actual laser used. In some usage environments, the suitable range of the infrared radiation signal can be extended beyond the range of 1250 nm to 1700 nm. In some usage environments, the visible light radiation signal can be extended beyond the range of 400 nm to 700 nm.

The solution of the present disclosure is specifically introduced below.

Referring to FIG. 2, FIG. 2 is a schematic flowchart of an additive manufacturing quality inspection method according to an embodiment of the present disclosure. As shown in FIG. 2, the method includes the following.

S201, an IPC acquires electrical signals corresponding to optical signals during a first period in a laser additive manufacturing process.

The first period is a period during which a target slice layer of a target part is processed in the laser additive processing, and the optical signals during the first period include at least two of: a laser emission signal from a laser device during the first period, and a laser reflection signal, a visible light signal, and an infrared light signal generated from the target slice layer during the first period.

During the laser additive manufacturing process, the visible light radiated by the generated keyhole metal vapor, the infrared light radiated by the molten pool, the laser light reflected without being absorbed by the powder, and the laser emission signal are collected by the sensor module 5 and subjected to photoelectric conversion into electrical signals. Specifically, the laser emission signal sensor obtains a corresponding voltage value V0, the visible light signal sensor obtains a corresponding voltage value V1, the laser reflection signal sensor obtains a corresponding voltage value V2, and the infrared light signal sensor obtains a corresponding voltage value V3. Gain adjustment is performed on the voltage values V0, V1, V2, and V3 separately, resulting in adjusted output electrical signals are output. During the processing of the target slice layer of the target part, at least two electrical signals of the electrical signal corresponding to the laser emission signal, the electrical signal corresponding to the laser reflection signal, the electrical signal corresponding to the visible light signal, and the electrical signal corresponding to the infrared light signal can be obtained according to the above-described method.

S202, the IPC constructs at least two trajectory amplitude maps respectively based on at least two electrical signals corresponding to the at least two optical signals.

A contour of each of the at least two trajectory amplitude maps is identical to a contour of the target slice layer, the trajectory amplitude map includes multiple trajectory amplitude lines, multiple trajectory amplitude lines correspond to processing trajectories during processing of the target slice layer, and an amplitude represented by the trajectory amplitude line is an amplitude of a corresponding electrical signal during the processing of the target slice layer.

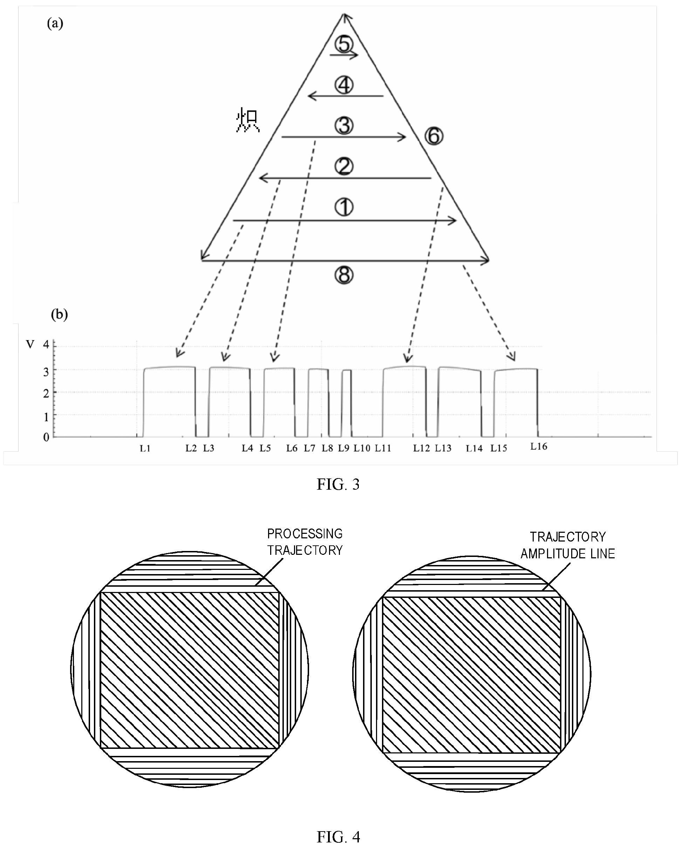

During the laser additive manufacturing process, preprocessing is performed on the model of the target part, i.e., slicing and layering the three-dimensional model of the target part in the Z-axis direction according to a preset slice layer thickness, thereby obtaining contour data of each layer section in the XY direction. Part (a) of FIG. 3 shows contour information of a certain slice layer of the target part model, wherein line segments ①-⑧ are the laser trajectories during the laser processing of this slice layer, and the arrows indicate the position where the laser stops emitting light in each laser trajectory. Part (b) of FIG. 3 shows an electrical signal variation diagram corresponding to each laser trajectory of this slice layer, obtained after the laser emission signal and the generated optical radiation signals (including laser reflection signal, visible light signal, and infrared light signal) during the laser additive manufacturing process are collected by the sensor module 5 and converted into electrical signals by photoelectric conversion, and then subjected to corresponding signal processing by the signal processor 6.

As shown in part (b) of FIG. 3, the electrical signal amplitude interval L1-L2 corresponds to laser trajectory ①, the electrical signal amplitude interval L3-L4 corresponds to laser trajectory ②, the electrical signal amplitude interval L5-L6 corresponds to laser trajectory ③, the electrical signal amplitude interval L7-L8 corresponds to laser trajectory ④, the electrical signal amplitude interval L9-L10 corresponds to laser trajectory ⑤, the electrical signal amplitude interval L11-L12 corresponds to laser trajectory ⑥, the electrical signal amplitude interval L13-L14 corresponds to laser trajectory ⑦, and the electrical signal amplitude interval L15-L16 corresponds to laser trajectory ⑧.

For example, the shape of the target slice layer is a circle, and the processing trajectories are shown in the left diagram of FIG. 4, and the corresponding trajectory amplitudes are shown in the right diagram of FIG. 4. The trajectory amplitude map schematically shown in the right diagram of FIG. 4 includes multiple trajectory amplitude lines, and the trajectory amplitude lines correspond to the processing trajectories for processing the target slice layer. Each trajectory amplitude line includes multiple pixel points, and the pixel value of a pixel point is used to characterize the amplitude of the target electrical signal at the corresponding moment during the processing of the target slice layer. Herein, the target electrical signal is the electrical signal corresponding to the laser emission signal, the electrical signal corresponding to the laser reflection signal, the electrical signal corresponding to the visible light signal, or the electrical signal corresponding to the infrared light signal.

Optionally, the IPC displays the trajectory amplitude map corresponding to the target slice layer. The inspection personnel can know the amplitude of the target electrical signal at the corresponding moment through the pixel value of the pixel point in the trajectory amplitude map.

In a possible implementation, the IPC constructs at least two trajectory amplitude maps respectively based on at least two electrical signals corresponding to the at least two optical signals as follows.

The IPC acquires start and end coordinates, a laser processing speed, and a sampling rate for each trajectory line in a target trajectory amplitude map, wherein the target trajectory amplitude map is one of the at least two trajectory amplitude maps. The IPC calculates a first number of additive manufacturing points for each trajectory line based on the start and end coordinates, the laser printing speed, and the sampling rate for the trajectory line. The IPC acquires a second number of additive manufacturing points for each trajectory line based on a target electrical signal, wherein the target electrical signal is an electrical signal corresponding to the target trajectory amplitude map. For a target trajectory line in the target trajectory amplitude map, if the difference between the first number of additive manufacturing points for the target trajectory line and the second number of additive manufacturing points for the target trajectory line does not exceed a difference threshold, then the target trajectory line is retained; if the difference exceeds the difference threshold, the target trajectory line is deleted.

Specifically, in the process of constructing a corresponding trajectory amplitude map based on an electrical signal corresponding to an optical signal, the IPC first obtains the start and end coordinates, laser printing speed, and sampling frequency (sampling rate) of each trajectory line in the trajectory amplitude map. The length of each trajectory line can be obtained based on the start and end coordinates of the trajectory line. The first number of additive manufacturing points for each trajectory line is calculated based on the length of the trajectory line, the laser printing speed, and the sampling frequency.

The length, the laser printing speed, the sampling frequency, and the first number of additive manufacturing points for each trajectory line satisfy the following formula:

$$points = Round \ (\frac{distance}{speed} * frequency)$$

wherein *points* represents the first number of additive manufacturing points for the trajectory line, *distance* represents the length of the trajectory line, *speed* represents the laser printing speed, and *frequency* represents the sampling frequency, which is the sampling frequency of the photoelectric sensor, such as 20kHz. *Round* represents a rounding function.

The first number of additive manufacturing points for a trajectory line is calculated based on the above formula and can be referred to as the theoretical number. Since the optical signal is collected by the photoelectric sensor, the IPC determines the second number of additive manufacturing points for the trajectory line based on the electrical signal corresponding to the optical signal, and this second number of additive manufacturing points can be referred to as the actual number of additive manufacturing points. For a target trajectory line, whether the target trajectory line is an abnormal trajectory line is determined by comparing the first number of additive manufacturing points and the second number of additive manufacturing points.

Specifically, the difference between the second number of additive manufacturing points for the target trajectory line and the first number of additive manufacturing points for the target trajectory line is determined, then a ratio of the absolute value of this difference to the first number of additive manufacturing points for the target trajectory line is determined. If this ratio does not exceed a preset ratio, then the IPC retains the target trajectory line; if the ratio exceeds the preset ratio, then the IPC deletes the target trajectory line.

It should be noted that an abnormal trajectory line refers to a situation where the laser does not emit light during the printing of the trajectory line, making the trajectory line abnormal.

Further, the IPC determines, in the above manner, whether the next trajectory adjacent to the target trajectory in processing sequence is an abnormal trajectory line. If it is determined that the next trajectory adjacent to the target trajectory in processing sequence is not an abnormal trajectory line, the IPC determines that the laser was not emitting light during processing the target trajectory line. In this case, the target trajectory line is determined to be an abnormal trajectory line, and the IPC deletes the target trajectory line. By performing this method, it can prevent the target trajectory line from being deleted by mistake, which is beneficial to improving the accuracy of identifying abnormal trajectory lines.

Being processed in the manner described above, each trajectory line is processed, and the retained trajectory lines can form a trajectory amplitude map.

For each of the at least two electrical signals, the above processing is performed, and the IPC can obtain at least two trajectory amplitude maps.

S203, the IPC partitions the at least two trajectory amplitude maps separately to obtain multiple first image blocks; the IPC performs block partitioning on each of multiple first image blocks separately to obtain multiple image block sets.

Here, each of the multiple first image blocks corresponds to a first region in the target slice layer, and each of the multiple image block sets corresponds to a second region in the target slice layer. Each image block set of the multiple image block sets includes at least two second image blocks, the at least two second image blocks respectively belong to the at least two trajectory amplitude maps, and the at least two second image blocks correspond to the same second region in the target slice layer.

Specifically, the IPC partitions each of the at least two trajectory amplitude maps according to a preset method. For each trajectory amplitude map, the IPC obtains multiple corresponding first image blocks; each of the first image blocks corresponds to a first region in the target slice layer. Then the IPC performs block partitioning on each of the multiple first image blocks to obtain multiple second image blocks; each of the second image blocks corresponds to a second region in the target slice layer. The IPC forms an image block set from the second image blocks respectively belonging to at least two trajectory amplitude maps, corresponding to the same second region in the target slice layer. Finally, the IPC obtains multiple image block sets. In other words, the second image blocks belonging to the same image block set correspond to the same second region in the target slice layer and respectively belong to at least two trajectory amplitude maps.

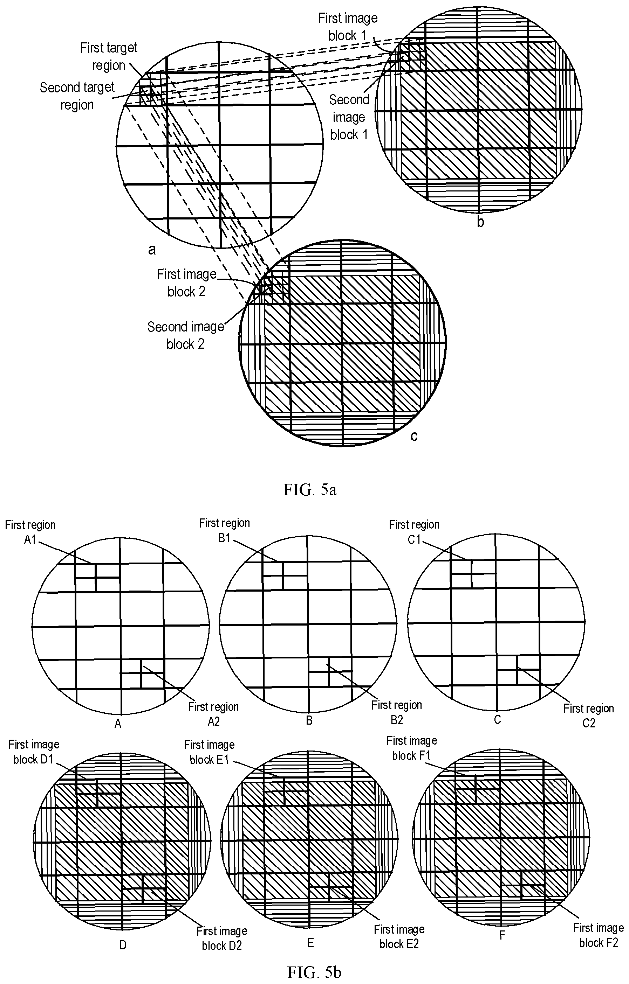

As shown in FIG. 5a, diagram a in FIG. 5a schematically shows the result obtained by partitioning the target slice layer into regions according to a preset method; diagrams b and c in FIG. 5a schematically show the results obtained by partitioning the trajectory amplitude maps corresponding to two electrical signals according to a preset method. It can be seen that the image blocks in the trajectory amplitude maps corresponding to the two electrical signals correspond to regions in the target slice layer. For example, the first image block 1 in diagram b of FIG. 5a and the first image block 2 in diagram c correspond to a first target region in the target slice layer; the second image block 1 in diagram b of FIG. 5a and the second image block 2 in diagram c of FIG. 5a correspond to a second target region in the target slice layer.

S204, the IPC determines, based on electrical signal amplitudes of the second image blocks in each image block set, whether a defect exists in a region corresponding to the second image blocks in each image block set in the target slice layer.

In a possible implementation, the electrical signal amplitude of an image block is the average electrical signal amplitude of the image block, or is obtained by weighting the electrical signal amplitudes of all points in the image block. The following description is based on an example where the electrical signal amplitude corresponding to an image block is the average electrical signal amplitude corresponding to the image block.

In a possible implementation, the IPC determines an inspection result corresponding to each image block in each image block set based on the average electrical signal amplitude of the second image block and an electrical-signal threshold range corresponding to the first image block to which the second image block belongs. When the average electrical signal amplitude of each second image block in each image block set exceeds the electrical-signal threshold range corresponding to the first image block to which the second image block belongs, the inspection result corresponding to the second image block is that the region corresponding to the second image block in the target slice layer has a defect;

when the average electrical signal amplitude of each second image block in each image block set does not exceed the electrical-signal threshold range corresponding to the first image block to which the second image block belongs, the inspection result corresponding to the second image block is that the region corresponding to the second image block in the target slice layer has a defect. According to the above-described method, the IPC determines whether the region corresponding to the second image blocks in each image block set in the target slice layer has a defect based on the inspection results corresponding to the second image blocks in each image block set.

For example, assuming diagram b in FIG. 5a is a trajectory amplitude map obtained based on the electrical signal corresponding to the laser emission signal, the target image set includes the second image block 1 in diagram b of FIG. 5a and the second image block 2 in diagram c of FIG. 5a. For the second image block 1, the IPC obtains the average electrical signal amplitude of the second image block 1 and the threshold range of the laser emission signal corresponding to the first image block 1. The IPC determines whether the average electrical signal amplitude of the second image block 1 exceeds the threshold range of the laser emission signal corresponding to the second image block 1. If the average electrical signal amplitude exceeds the threshold range, the IPC determines that an inspection result corresponding to the second image block 1 is that the second target region in the target slice layer has a defect; if it does not exceed, the IPC determines that the inspection result corresponding to the second image block 1 is that the second target region in the target slice layer has no defects.

In the same way, the IPC can obtain an inspection result corresponding to the second image block 2. The IPC determines whether the second target region in the target slice layer has a defect based on the inspection result corresponding to the second image block 1 and the inspection result corresponding to the second image block 2.

In another possible implementation, the IPC determines a ratio for each second image block in each image block set, wherein the ratio for each second image block is a ratio of the average electrical signal amplitude of the second image block to the average electrical signal amplitude of the first image block to which the second image block belongs. When the ratio for each second image block exceeds an electrical-signal ratio range corresponding to the first image block to which the second image block belongs, the inspection result corresponding to each second image block is that the region corresponding to the second image block in the target slice layer has a defect; when the ratio for each image block does not exceed the electrical-signal ratio range corresponding to the first image block set to which the second image block belongs, the inspection result corresponding to the second image block is that the region corresponding to each second image block in the target slice layer has no defects.

For example, assuming diagram b in FIG. 5a is a trajectory amplitude map obtained based on the electrical signal corresponding to the laser emission signal, the target image set includes the second image block 1 in diagram b of FIG. 5a and the second image block 2 in diagram c of FIG. 5a. For the second image block 1, the IPC obtains a ratio of an average electrical signal amplitude of the second image block 1 to an average electrical signal amplitude of the first image block 1, and obtains a ratio range of the laser emission signal corresponding to the second image block 1. The IPC determines whether the ratio of the average electrical signal amplitude of the second image block 1 to the average electrical signal amplitude of the second image block 1 exceeds the ratio range of the laser emission signal corresponding to the second image block 1. If the ratio exceeds the ratio range, the IPC determines that an inspection result corresponding to the second image block 1 is that the second target region in the target slice layer has a defect; if it does not exceed, the IPC determines that the inspection result corresponding to the second image block 1 is that the second target region in the target slice layer has no defects.

In the same way, the IPC can obtain an inspection result corresponding to the second image block 2. The IPC determines whether the second target region in the target slice layer has a defect based on the inspection result corresponding to the second image block 1 and the inspection result corresponding to the second image block 2.

Due to a large printing area or errors during printer installation, when printing a slice layer, the amplitude intensity of some regions in the trajectory amplitude map will always be higher than that of other regions. If the method of comparing the global average electrical signal amplitude with a threshold is used to determine whether a slice layer has a defect, the result may be inaccurate. However, in this embodiment, by partitioning the trajectory amplitude map into blocks and then making determinations on a block-by-block basis, the accuracy of determining whether a slice layer has a defect is improved, and the location of the defect in the slice layer can be identified.

In a possible implementation, the IPC determines whether the region corresponding to the second image blocks in each image block set in the target slice layer has a defect based on the inspection results corresponding to the second image blocks in each image block set as follows.

When each of inspection results corresponding to all image blocks in a target image block set indicates that the region corresponding to the image blocks in the target slice layer has a defect, then the IPC determines that the region corresponding to the image blocks in the target image block set in the target slice layer has a defect, wherein the target image block set is one of multiple image block sets.

For example, assuming the target image block set includes the second image block 1 and the second image block 2, as shown in FIG. 5a, if the inspection result corresponding to the second image block 1 is that the second target region in the target slice layer has a defect, and the inspection result corresponding to the second image block 2 is that the second target region in the target slice layer has a defect, then the IPC determines that the second target region in the target slice layer has a defect; if the inspection result corresponding to the second image block 1 is that the second target region in the target slice layer has no defects, or the inspection result corresponding to the second image block 2 is that the second target region in the target slice layer has no defects, then the IPC determines that the second target region in the target slice layer has no defects.

Only when the inspection results corresponding to all second image blocks in the image block set indicate that the region corresponding to the image block set in the target slice layer has a defect, it is determined that the region corresponding to the image block set in the target slice layer has a defect, thereby improving the accuracy of the inspection result.

In a possible implementation, the IPC determines whether the region corresponding to the second image blocks in each image block set in the target slice layer has a defect based on the inspection results corresponding to the second image blocks in each image block set as follows.

For a target image block set, when there are multiple second image blocks whose corresponding inspection results indicate that the region in the target slice layer has a defect, if the multiple second image blocks include a second image block with a priority higher than a preset priority, then the IPC determines that the region corresponding to the second image blocks in the target image block set in the target slice layer has a defect, wherein the target image block set is one of multiple image block sets. If the multiple second image blocks do not include an image block with a priority higher than the preset priority, then when the number of the multiple second image blocks is greater than a preset number, the IPC determines that the region corresponding to the second image blocks in the target image block set in the target slice layer has a defect.

In a possible implementation, a second image block A has a higher priority than a second image block B, the second image block B has a higher priority than a second image block C, and the second image block C has a higher priority than a second image block D, wherein the second image block A belongs to a trajectory amplitude map constructed based on an electrical signal corresponding to the laser emission signal from the laser device; the second image block B belongs to a trajectory amplitude map constructed based on the electrical signal corresponding to the infrared light signal; the second image block C belongs to a trajectory amplitude map constructed based on the electrical signal corresponding to the visible light signal; the second image block D belongs to a trajectory amplitude map constructed based on the electrical signal corresponding to the laser reflection signal. For example, the priority of the first image block is the first priority, the priority of the second image block is the second priority, the priority of the third image block is the third priority, and the priority of the fourth image block is the fourth priority.

For example, assume the preset priority is the second priority, the preset number is 2, and the target image block set includes the second image block 1 and the second image block 2 shown in FIG. 5a, as well as second image blocks 3 and 4 not shown in FIG. 5a. The second image block 1 and the second image block 2 respectively belong to a trajectory amplitude map obtained based on the electrical signal corresponding to the laser emission signal and a trajectory amplitude map obtained based on the electrical signal corresponding to the laser reflection signal. The second image block 3 and the second image block 4 respectively belong to a trajectory amplitude map obtained based on the electrical signal corresponding to the visible light signal and a trajectory amplitude map obtained based on the electrical signal corresponding to the infrared light signal. That is to say, the priority of the second image block 1 is the first priority, the priority of the second image block 2 is the fourth priority, and the priorities of the second image block 3 and the second image block 4 are the second priority and the third priority respectively.

It should be understood that the second image block 3 and the second image block 4 correspond to the second target region in the target slice layer.

If the inspection result of the second image block 1 is that the second target region in the target slice layer has a defect, since the priority of the second image block 1 is higher than the second priority (i.e., the preset priority), the IPC directly determines that the second target region in the target slice layer has a defect, without needing to determine the inspection results of the second image block 2, the second image block 3, and the second image block 4. If the inspection result of the second image block 1 is that the second target region in the target slice layer has no defects, the IPC continues to determine the inspection results of the second image block 2, the second image block 3, and the second image block 4. If the inspection results of the second image block 2, the second image block 3, and the second image block 4 are all that the second target region in the target slice layer has a defect, that is, the number of second image blocks in the target image block set whose inspection result indicates that the corresponding second target region in the target slice layer has a defect is greater than the preset number, then the IPC determines that the second target region in the target slice layer has a defect. If the inspection results of some of the second image block 2, the second image block 3, and the second image block 4 are that the second target region in the target slice layer has a defect, that is, the number of second image blocks in the target image block set whose inspection result indicates that the corresponding second target region in the target slice layer has a defect is not greater than the preset number, then the IPC determines that the second target region in the target slice layer has no defects.

In a possible implementation, the IPC constructs multiple trajectory amplitude maps corresponding to a target electrical signal based on the target electrical signal corresponding to multiple reference slice layers, wherein the multiple trajectory amplitude maps are respectively corresponding to the multiple reference slice layers. The multiple reference slice layers are slice layers determined to have no defects according to the method of the present disclosure. The contours of the reference slice layers are the same as or similar to the contour of the target slice layer, and the multiple reference slice layers are slice layers for laser processing of a part made of the same material as the target part. For each of the multiple trajectory amplitude maps, partitioning is performed according to the same preset method to obtain multiple first image blocks; multiple first regions can be obtained for the reference slice layers according to the same partitioning method, and the multiple first image blocks of the same slice layer correspond to the multiple first regions respectively. Based on the first image blocks obtained by partitioning the multiple trajectory amplitude maps, multiple image block sets are obtained, wherein each image block set includes multiple first image blocks, and these multiple first image blocks respectively belong to the above-mentioned multiple trajectory amplitude maps and correspond to a region at the same position in the multiple reference slice layers. The first image blocks in the same image block set are partitioned according to the same partitioning method to obtain multiple second image blocks; the maximum and minimum values of the average electrical signal amplitudes of these multiple second image blocks are respectively used as the maximum and minimum values of the electrical-signal threshold range corresponding to the image block set.

It should be understood that the first image blocks in the above image block set correspond to the same first region in the reference slice layers. When determining whether there is a defect in the target slice layer, the trajectory amplitude map corresponding to the target slice layer is also partitioned in the same way, and the obtained first image block correspond to the same region in the target slice layer. Therefore, the electrical-signal threshold range corresponding to the above image block set can be regarded as the electrical-signal threshold range corresponding to the first image block.

As shown in FIG. 5b, diagrams A, B, and C in FIG. 5b respectively illustrate a reference slice layer, and the contours of these three slice layers are the same. The position of the first region A1 in the reference slice layer shown in diagram A, the position of the first region B1 in the reference slice layer shown in diagram B, and the position of the first region C1 in the reference slice layer shown in diagram C are the same. Diagrams D, E, and F of FIG. 5b illustrate trajectory amplitude maps corresponding to the target electrical signals of the reference slice layers illustrated in diagrams A, B, and C, respectively. The first image block D1 corresponds to the first region A1, the first image block E1 corresponds to the first region B1, and the first image block F1 corresponds to the first region C1.

Similarly, the position of the first region A2 in the reference slice layer shown in diagram A of FIG. 5b, the position of the first region B2 in the reference slice layer shown in diagram B of FIG. 5b, and the position of the first region C2 in the reference slice layer shown in diagram C of FIG. 5b are the same. The first image block D2 corresponds to the first region A2, the first image block E2 corresponds to the first region B2, and the first image block F2 corresponds to the first region C2.

For the first image block D1, the first image block E1, and the first image block F1, block partitioning is performed separately according to the same method to obtain 12 second image blocks. The maximum and minimum values of the average electrical signal amplitudes of the target electrical signals corresponding to these 12 second image blocks are determined as the upper and lower limits of the threshold range corresponding to the target electrical signals of the first image block D1, the first image block E1, and the first image block F1.

Similarly, for the first image block D2, the first image block E2, and the first image block F2, block partitioning is performed separately according to the same method to obtain 12 second image blocks. The maximum and minimum values of the average electrical signal amplitudes of the target electrical signals corresponding to these 12 second image blocks are determined as the upper and lower limits of the threshold range corresponding to the target electrical signals of the first image block D2, the first image block E2, and the first image block F2.

According to the above-described method, the threshold range of the target electrical signal corresponding to each first image block can be obtained.

In a possible implementation, the IPC constructs multiple trajectory amplitude maps corresponding to a target electrical signal based on the target electrical signal corresponding to multiple reference slice layers, wherein the multiple trajectory amplitude maps are respectively corresponding to the multiple reference slice layers. The multiple reference slice layers are slice layers determined to have no defects according to the method of the present disclosure. The contours of the reference slice layers are the same as or similar to the contour of the target slice layer, and the multiple reference slice layers are slice layers for laser processing of a part made of the same material as the target part. For each of the multiple trajectory amplitude maps, partitioning is performed according to the same preset method to obtain multiple first image blocks; multiple first regions can be obtained for the reference slice layers according to the same partitioning method, and the multiple first image blocks of the same slice layer correspond to the multiple first regions respectively. Based on the first image blocks obtained by partitioning the multiple trajectory amplitude maps, multiple image block sets are obtained, wherein each image block set includes multiple first image blocks, and these multiple first image blocks respectively belong to the above multiple trajectory amplitude maps and correspond to a region at the same position in the multiple reference slice layers. The first image blocks in the same image block set are partitioned according to the same partitioning method to obtain multiple second image blocks.

Optionally, preprocessing is performed on the multiple second image blocks based on the average electrical signal amplitudes of these multiple second image blocks. For example, after sorting the average electrical signal amplitudes of the multiple second image blocks in ascending order, $k$ second image blocks with the highest average electrical signal amplitudes and $k$ second image blocks with the lowest average electrical signal amplitudes are removed.

The IPC obtains a ratio of the average electrical signal amplitude of each second image block to the average electrical signal amplitude to which the second image block belongs. Among the ratios corresponding to the second image blocks obtained according to the above-described method, the maximum ratio and the minimum ratio are determined as the upper and lower limits of the ratio range corresponding to the image block set.

It should be understood that the first image blocks in the above image block set correspond to the same first region in the reference slice layers. When determining whether there is a defect in the target slice layer, the trajectory amplitude map corresponding to the target slice layer is also partitioned in the same way, and the obtained first image block corresponds to the same region in the target slice layer. Therefore, the ratio range of the electrical signal corresponding to the above image block set can be regarded as the ratio range of the electrical signal corresponding to the first image block.

As shown in FIG. 5b, diagrams A, B, and C in FIG. 5b respectively illustrate reference slice layer, and the contours of these three slice layers are the same. The position of the first region A1 in the reference slice layer shown in diagram A, the position of the first region B1 in the reference slice layer shown in diagram B, and the position of the first region C1 in the reference slice layer shown in diagram C are the same. The trajectory amplitude maps illustrated in diagrams D, E, and F of FIG. 5b are the trajectory amplitude maps corresponding to the target electrical signal of the reference slice layers illustrated in diagrams A, B, and C, respectively. The first image block D1 corresponds to the first region A1, the first image block E1 corresponds to the first region B1, and the first image block F1 corresponds to the first region C1.

Similarly, the position of the first region A2 in the reference slice layer shown in diagram A, the position of the first region B2 in the reference slice layer shown in diagram B, and the position of the first region C2 in the reference slice layer shown in diagram C are the same. The first image block D2 corresponds to the first region A2, the first image block E2 corresponds to the first region B2, and the first image block F2 corresponds to the first region C2.

For the first image block D1, the first image block E1, and the first image block F1, block partitioning is performed separately according to the same method to obtain 12 second image blocks. For each of the 12 second image blocks, a ratio of an average electrical signal amplitude of the second image block to an average electrical signal amplitude of the first image block to which the second image block belongs is determined. The maximum and minimum values among the ratios corresponding to these 12 second image blocks are determined as the upper and lower limits of the ratio range corresponding to the target electrical signal of the first image block D1, the first image block E1, and the first image block F1.

Similarly, for the first image block D2, the first image block E2, and the first image block F2, block partitioning is performed separately according to the same method to obtain 12 second image blocks. For each of the 12 second image blocks, a ratio of an average electrical signal amplitude of the second image block to an average electrical signal amplitude of the first image block to which the second image block belongs is determined. The maximum and minimum values among the ratios corresponding to these 12 second image blocks are determined as the upper and lower limits of the ratio range corresponding to the target electrical signal of the first image block D2, the first image block E2, and the first image block F2.

According to the above-described method, the ratio range of the target electrical signal corresponding to each first image block can be obtained.

In the above-described methods, the target electrical signal is the electrical signal corresponding to the laser emission signal, the electrical signal corresponding to the laser reflection signal, the electrical signal corresponding to the visible light signal, or the electrical signal corresponding to the infrared light signal. That is to say, the threshold range corresponding to the laser emission signal, the threshold range corresponding to the laser reflection signal, the threshold range corresponding to the visible light signal, and the threshold range corresponding to the infrared light signal can be obtained according to the above-mentioned method.

It should be understood that the preset method for partitioning the trajectory amplitude map when determining the threshold range is the same as the preset method for partitioning the trajectory amplitude map when determining whether there is a defect in the target slice layer.

In a possible implementation, when the IPC determines that there is a region in the target slice layer, the IPC obtains position information of the abnormal region in the target slice layer, and transmits the position information of the abnormal region to the laser processing system, so that the laser processing system re-processes the abnormal region in the target slice layer based on the position information of the abnormal region in the target slice layer, thereby eliminating the defect in the target slice layer. It should be understood that the laser processing system here specifically refers to the control system of laser additive manufacturing equipments.

It should be understood that since the image blocks of the target slice layer are obtained by partitioning the trajectory amplitude map of the target slice layer according to a preset method, and the image blocks correspond to regions in the target slice layer, after determining the abnormal region in the target slice layer, the IPC determines the position information of the abnormal region in the target slice layer based on the preset method.

In a feasible implementation, when it is determined that there is an abnormal region in the target slice layer, the IPC obtains an average electrical signal amplitude of the laser emission signal, an average electrical signal amplitude of the laser reflection signal, an average electrical signal amplitude of the visible light signal, and an average electrical signal amplitude of the infrared light signal corresponding to the abnormal region. The IPC compares the average electrical signal amplitude of the laser emission signal, the average electrical signal amplitude of the laser reflection signal, the average electrical signal amplitude of the visible light signal, and the average electrical signal amplitude of the infrared light signal corresponding to the abnormal region respectively with corresponding preset thresholds. Based on the comparison results, the IPC transmits instruction information to the control system of the laser additive manufacturing equipment to instruct the control system of the laser additive manufacturing equipment to adjust a laser output power. If the number of electrical signals higher than the corresponding preset thresholds is greater than the number of electrical signals lower than the corresponding preset thresholds, it indicates that the reason for the abnormal region in the target slice layer may be that the laser output power is too high, then the instruction information is used to instruct the control system of the laser additive manufacturing equipment to reduce the laser output power. If the number of electrical signals higher than the corresponding preset thresholds is not greater than the number of electrical signals lower than the corresponding preset thresholds, it indicates that the reason for the abnormal region in the target slice layer may be that the laser output power is too low, then the instruction information is used to instruct the control system of the laser additive manufacturing equipment to increase the laser output power.

After completing the above adjustment, the IPC transmits the position information of the abnormal region to the control system of laser additive manufacturing equipments, enabling the control system of laser additive manufacturing equipments to control the re-processing of the abnormal region according to the position information of the abnormal region and the instruction information, to achieve the purpose of eliminating the defect in the target slice layer. In addition, by processing subsequent slice layers based on the adjusted output power, the occurrence of defects in subsequent slice layers can be avoided.

In combination with the first aspect, in a possible implementation, the method of this embodiment further includes the following.

Manner 1: the IPC obtains a ratio of the area of the abnormal region in the target slice layer to the area of the target slice layer. When the ratio of the area of the abnormal region in the target slice layer to the area of the target slice layer is greater than a first preset ratio, that is, when the area of the abnormal region in the target slice layer is relatively large, the IPC determines that the abnormal region in the target slice layer needs to be re-processed. The IPC transmits the position information of the abnormal region in the target slice layer to the laser processing system, so that the laser processing system re-processes the abnormal region in the target slice layer based on the position information of the abnormal region in the target slice layer.

Manner 2: the IPC obtains position information of all abnormal regions from the first layer to the target slice layer, then groups all the position information of the abnormal regions, wherein position information in the same group indicating the same position, and determines a target group based on the grouping result. The target group is a group of which the number of pieces of position information is greater than a preset number, that is, the position corresponding to the target group is a position where abnormal regions occur more frequently, possibly caused by incorrect processing parameter settings of the laser processing system. Therefore, the IPC transmits the position information corresponding to the target group to the laser processing system, so that the laser processing system adjusts the parameter(s) of the laser processing system based on the target position information, thereby avoiding occurrence of abnormalities again in the same region in subsequent slice layers.

Manner 3: the IPC obtains a ratio of the total area of all abnormal regions from the first layer to the target slice layer to the total area of all slice layers from the first layer to the target slice layer. When the ratio of the total area of all abnormal regions from the first layer to the target slice layer to the total area of all slice layers from the first layer to the target slice layer is greater than a second preset ratio, and the ratio of the area of the abnormal region in the target slice layer to the area of the target slice layer is not greater than the first preset ratio, that is, the area of the abnormal region in the target slice layer is relatively small, but the cumulative area of abnormal regions during the processing from the first layer to the target slice layer is relatively large, the IPC needs to suppress the increase in the area of abnormal regions. In this case, the IPC transmits the position information of all abnormal regions in the target slice layer to the laser processing system, so that the laser processing system re-processes the abnormal regions in the target slice layer based on the position information of the abnormal regions in the target slice layer. Optionally, the IPC also transmits position information of abnormal regions in a preset number of slice layers adjacent to the target slice layer to the laser processing system, so that when the laser processing system re-processes the abnormal region in the target slice layer based on the position information of the abnormal region in the target slice layer, it also re-processes the abnormal regions in the preset number of slice layers adjacent to the target slice layer, further suppressing the increase in the area of abnormal regions.

It should be noted here that Manner 1 and Manner 2 can be executed independently or simultaneously, which is not limited herein.

In a possible implementation, the IPC acquires one or more of: position information of an abnormal region in the target slice layer, a ratio of an area of the abnormal region in the target slice layer to an area of the target slice layer, a ratio of a total area of all abnormal regions from a first layer to the target slice layer to a total area of all slice layers from the first layer to the target slice layer, and position information corresponding to a target group, wherein the target group is a group for which a number of pieces of position information is greater than a preset number, the target group is obtained by grouping position information of all abnormal regions from the first layer to the target slice layer, and position information within a same group indicates a same position. The IPC transmits to a laser processing system one or more of: the position information of the abnormal region in the target slice layer, the ratio of the area of the abnormal region in the target slice layer to the area of the target slice layer, the ratio of the total area of all abnormal regions from the first layer to the target slice layer to the total area of all slice layers from the first layer to the target slice layer, and the position information corresponding to the target group, to enable the laser processing system to re-process the abnormal region in the target slice layer based on one or more of the position information of the abnormal region in the target slice layer, the ratio of the area of the abnormal region in the target slice layer to the area of the target slice layer, and the ratio of the total area of all abnormal regions from the first layer to the target slice layer to the total area of all slice layers from the first layer to the target slice layer, and to enable the laser processing system to adjust a parameter of the laser processing system based on the position information corresponding to the target group.

It should be noted here that the specific process of the laser processing system re-processing the abnormal region in the target slice layer based on one or more of the position information of the abnormal region in the target slice layer, the ratio of the area of the abnormal region in the target slice layer to the area of the target slice layer, and the ratio of the total area of all abnormal regions from the first layer to the target slice layer to the total area of all slice layers from the first layer to the target slice layer, as well as the specific process of the laser processing system adjusting the parameter(s) of the laser processing system based on the position information corresponding to the target group can be referred to the relevant description of the operations performed by the IPC above, and will not be described again here.

Optionally, before transmitting to the laser processing system one or more of the position information of the abnormal region in the target slice layer, the ratio of the area of the abnormal region in the target slice layer to the area of the target slice layer, the ratio of the total area of all abnormal regions from the first layer to the target slice layer to the total area of all slice layers from the first layer to the target slice layer, and the position information corresponding to the target group, the IPC transmits a re-processing request or a processing-parameter adjustment request to a terminal device of the processing personnel. If a response message from the processing personnel indicating agreement to re-process or to adjust the processing parameter is received, then the IPC transmits to the laser processing system one or more of the position information of the abnormal region in the target slice layer, the ratio of the area of the abnormal region in the target slice layer to the area of the target slice layer, the ratio of the total area of all abnormal regions from the first layer to the target slice layer to the total area of all slice layers from the first layer to the target slice layer, and the position information corresponding to the target group.

It should be understood that the laser processing system here specifically refers to the control system of the laser additive manufacturing equipment.

This method allows the processing personnel to determine whether to re-process the abnormal region or adjust the processing parameter, or allows the processing personnel to further determine whether the abnormal region is a true abnormal region, and then determine whether to re-process the abnormal region. In this way, the flexibility of processing is improved.

By acquiring and displaying the above-mentioned information, the processing personnel can be enabled to know the information of abnormal regions of each slice layer from the first layer to the current layer and the overall information of abnormal regions from the first layer to the current layer during this processing.

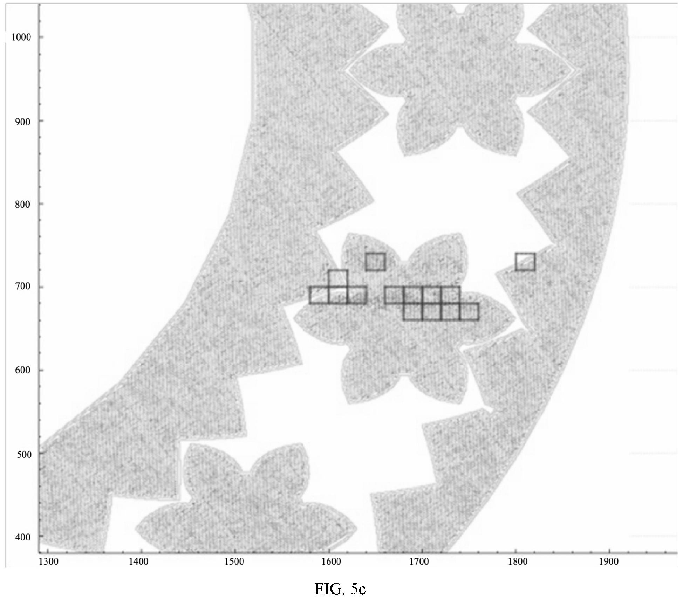

In a possible implementation, the method of this embodiment further includes the following. The IPC displays the at least two trajectory amplitude maps, and displays a result of whether the target slice layer has a defect. When the IPC determines that the target slice layer has a defect, the IPC displays or marks the abnormal region in the target slice layer on the at least two trajectory amplitude maps, so that the inspection personnel know the position information of the abnormal region in the target slice layer. As shown in FIG. 5c, the abnormal region in the target slice layer is marked by a boxed area.

It can be seen that in the solution of the present disclosure, during the process of processing the target slice layer of the target part, at least two of the electrical signal corresponding to the laser emission signal, the electrical signal corresponding to the laser reflection signal, the electrical signal corresponding to the visible light signal, and the electrical signal corresponding to the infrared light signal are acquired; at least two trajectory amplitude maps are constructed respectively based on the acquired at least two of the electrical signal corresponding to the laser emission signal, the electrical signal corresponding to the laser reflection signal, the electrical signal corresponding to the visible light signal, and the electrical signal corresponding to the infrared light signal. By performing block partitioning on the constructed trajectory amplitude maps and determining the region where a defect exists in the target slice layer, i.e., the abnormal region, based on the average electrical signal amplitudes of the image blocks obtained from the partitioning, this method can inspect abnormal regions in the slice layer of the part during additive processing. Compared with related arts, the method does not damage the part and has low cost. By determining whether the region corresponding to each image block set in the target slice layer has a defect using the average electrical signal amplitudes of at least two image blocks respectively belonging to at least two trajectory amplitude maps, the accuracy of the determination result can be improved. By displaying the at least two trajectory amplitude maps and the result of whether there is a defect, it is convenient for the processing personnel to know whether there is a defect in the target slice layer. Furthermore, when there is a defect, it is convenient for the processing personnel to know which specific region in the target slice layer has the defect, so as to facilitate subsequent re-processing.

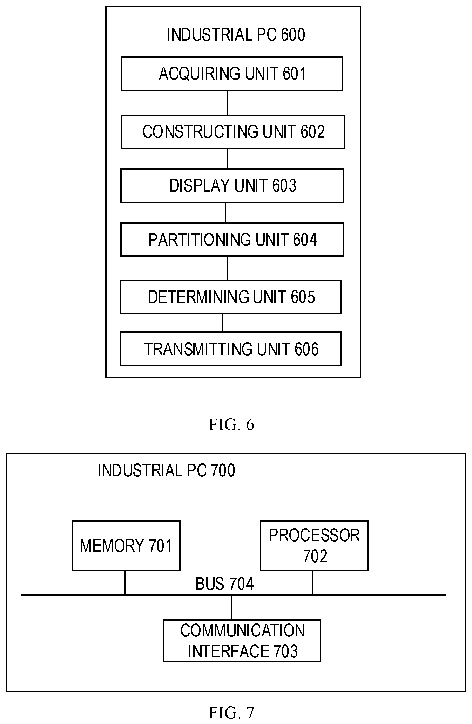

Referring to FIG. 6, an embodiment of the present disclosure provides a schematic structural diagram of an IPC. As shown in FIG. 6, the IPC 600 includes an acquiring unit 601, a constructing unit 602, a display unit 603, a partitioning unit 604, and a determining unit 605.

The acquiring unit 601 is configured to acquire electrical signals corresponding to optical signals during a first period in a laser additive manufacturing process, wherein the first period is a period during which a target slice layer of a target part is processed in the laser additive processing, and the optical signals include at least two of: a laser emission signal from a laser device during the first period, and a laser reflection signal, a visible light signal, and an infrared light signal generated from the target slice layer during the first period.

The constructing unit 602 is configured to construct at least two trajectory amplitude maps respectively based on at least two electrical signals corresponding to the at least two optical signals, wherein a contour of each of the at least two trajectory amplitude maps is identical to a contour of the target slice layer, the trajectory amplitude map includes multiple trajectory amplitude lines, multiple trajectory amplitude lines correspond to processing trajectories during processing of the target slice layer, and an amplitude represented by the trajectory amplitude line is an amplitude of a corresponding electrical signal during the processing of the target slice layer.

The display unit 603 is configured to display the at least two trajectory amplitude maps.

The partitioning unit 604 is configured to partition the at least two trajectory amplitude maps separately to obtain multiple first image blocks, and perform block partitioning on each of multiple first image blocks separately to obtain multiple image block sets, wherein multiple image block sets correspond to regions in the target slice layer, each image block set of multiple image block sets includes at least two second image blocks, the at least two second image blocks respectively belong to the at least two trajectory amplitude maps, and the at least two second image blocks correspond to a same region in the target slice layer.

The determining unit 605 is configured to determine, based on electrical signal amplitudes of the second image blocks in each image block set, whether the region corresponding to the second image blocks in each image block set in the target slice layer has a defect.

The display unit 603 is further configured to display, based on a determination that the target slice layer has a defect, an abnormal region in the target slice layer on the at least two trajectory amplitude maps.

In a possible implementation, in terms of determining, based on the electrical signal amplitudes of the second image blocks in each image block set, whether the region corresponding to the second image blocks in each image block set in the target slice layer has a defect, the determining unit 605 is specifically configured to: determine an inspection result corresponding to each second image block based on the electrical signal amplitude of each second image block in each image block set and an electrical-signal threshold range corresponding to the first image block to which the second image block belongs; determine whether the region corresponding to the second image blocks in each image block set in the target slice layer has a defect based on the inspection results corresponding to the second image blocks in each image block set.

In a possible implementation, when the electrical signal amplitude of each second image block exceeds the electrical-signal threshold range corresponding to the first image block to which the image block belongs, the inspection result corresponding to each second image block is that the region corresponding to the image block in the target slice layer has a defect. When the electrical signal amplitude of each second image block does not exceed the electrical-signal threshold range corresponding to the second image block to which the image block belongs, the inspection result corresponding to each second image block is that the region corresponding to the second image block in the target slice layer has a defect.

In a possible implementation, in terms of determining the inspection result corresponding to each second image block based on the electrical signal amplitude of each second image block in each image block set, the determining unit 605 is specifically configured to perform the following.

The IPC determines a ratio for each second image block, wherein the ratio for each second image block is a ratio of the electrical signal amplitude of the second image block to the electrical signal amplitude of the first image block to which the second image block belongs. When the ratio for each second image block exceeds an electrical-signal ratio range corresponding to the first image block to which the second image block belongs, the inspection result corresponding to each second image block is that the region corresponding to each second image block in the target slice layer has a defect. When the ratio for each image block does not exceed the electrical-signal ratio range corresponding to the first image block set to which the second image block belongs, the inspection result corresponding to each second image block is that the region corresponding to each second image block in the target slice layer has no defects.

In a possible implementation, in terms of determining whether the region corresponding to the second image blocks in each image block set in the target slice layer has a defect based on the inspection results corresponding to the second image blocks in each image block set, the determining unit 605 is specifically configured to: when inspection results corresponding to all second image blocks in a target image block set indicate that the region corresponding to the second image blocks in the target slice layer have a defect, then determine that the region corresponding to the second image blocks in the target image block set in the target slice layer has a defect, wherein the target image block set is one of multiple image block sets.

In a possible implementation, in terms of determining whether the region corresponding to the second image blocks in each image block set in the target slice layer has a defect based on the inspection results corresponding to the second image blocks in each image block set, the determining unit 605 is specifically configured to: in a target image block set, when there are multiple second image blocks whose inspection result indicates that the region in the target slice layer has a defect, if multiple second image blocks include a second image block with a priority higher than a preset priority, then determine that the region corresponding to the second image blocks in the target image block set in the target slice layer has a defect, wherein the target image block set is one of multiple image block sets. If multiple second image blocks do not include a second image block with a priority higher than the preset priority, when the number of multiple second image blocks is greater than a preset number, determine that the region corresponding to the second image blocks in the target image block set in the target slice layer has a defect.

In a possible implementation, a second image block A has a higher priority than a second image block B, the second image block B has a higher priority than a second image block C, and the second image block C has a higher priority than a second image block D. The second image block A belongs to a trajectory amplitude map constructed based on an electrical signal corresponding to the laser emission signal from the laser device; the second image block B belongs to a trajectory amplitude map constructed based on the electrical signal corresponding to the infrared light signal; the second image block C belongs to a trajectory amplitude map constructed based on the electrical signal corresponding to the visible light signal; the second image block D belongs to a trajectory amplitude map constructed based on the electrical signal corresponding to the laser reflection signal.

In a possible implementation, the acquiring unit 601 is further configured to acquire one or more of: position information of an abnormal region in the target slice layer, a ratio of an area of the abnormal region in the target slice layer to an area of the target slice layer, a ratio of a total area of all abnormal regions from a first layer to the target slice layer to a total area of all slice layers from the first layer to the target slice layer, and position information corresponding to a target group. The target group is a group for which a number of pieces of position information is greater than a preset number, the target group is obtained by grouping position information of all abnormal regions from the first layer to the target slice layer, and position information within a same group indicates a same position.

The IPC further includes a transmitting unit 606 that is configured to transmit to a laser processing system one or more of: the position information of the abnormal region in the target slice layer, the ratio of the area of the abnormal region in the target slice layer to the area of the target slice layer, the ratio of the total area of all abnormal regions from the first layer to the target slice layer to the total area of all slice layers from the first layer to the target slice layer, and the position information corresponding to the target group, to enable the laser processing system to re-process the abnormal region in the target slice layer based on one or more of the position information of the abnormal region in the target slice layer, the ratio of the area of the abnormal region in the target slice layer to the area of the target slice layer, and the ratio of the total area of all abnormal regions from the first layer to the target slice layer to the total area of all slice layers from the first layer to the target slice layer, and to enable the laser processing system to adjust a parameter of the laser processing system based on the position information corresponding to the target group.

In a possible implementation, the acquiring unit 601 is further configured to acquire a ratio of an area of an abnormal region in the target slice layer to an area of the target slice layer. The transmitting unit 606 is further configured to: when the ratio of the area of the abnormal region in the target slice layer to the area of the target slice layer is greater than a first preset ratio, transmit position information of the abnormal region in the target slice layer to a laser processing system, to enable the laser processing system to re-process the abnormal region in the target slice layer based on the position information of the abnormal region in the target slice layer.

Alternatively, the acquiring unit 601 is further configured to acquire position information of all abnormal regions from a first layer to the target slice layer, and group all the position information of the abnormal regions, position information within a same group indicating a same position. The transmitting unit 606 is further configured to transmit position information corresponding to a target group to the laser processing system, to enable the laser processing system to adjust a parameter of the laser processing system based on the target position information, wherein the target group is a group for which the number of pieces of position information is greater than a preset number.

Alternatively, the acquiring unit 601 is further configured to acquire a ratio of a total area of all abnormal regions from the first layer to the target slice layer to a total area of all slice layers from the first layer to the target slice layer. The transmitting unit 606 is further configured to: if the ratio of the total area of all abnormal regions from the first layer to the target slice layer to the total area of all slice layers from the first layer to the target slice layer is greater than a second preset ratio, and the ratio of the area of the abnormal region in the target slice layer to the area of the target slice layer is not greater than the first preset ratio, then transmit position information of all abnormal regions in the target slice layer to the laser processing system, to enable the laser processing system to re-process the abnormal regions in the target slice layer based on the position information of the abnormal regions in the target slice layer.

In a possible implementation, the electrical signal amplitude of the second image block is an average electrical signal amplitude of the second image block, or is obtained by weighting electrical signal amplitudes of all points in the second image block.

In a possible implementation, the constructing unit 602 is specifically configured to: acquire start and end coordinates, a laser processing speed, and a sampling rate for each trajectory line in a target trajectory amplitude map, wherein the target trajectory amplitude map is one of the at least two trajectory amplitude maps; calculate a first number of additive manufacturing points for each trajectory line based on the start and end coordinates, the laser printing speed, and the sampling rate for the trajectory line; acquire a second number of additive manufacturing points for each trajectory line based on a target electrical signal, wherein the target electrical signal is an electrical signal corresponding to the target trajectory amplitude map; for a target trajectory line in the target trajectory amplitude map, if a ratio of an absolute value of a difference between the second number of additive manufacturing points for the target trajectory line and the first number of additive manufacturing points for the target trajectory line to the first number of additive manufacturing points does not exceed a preset ratio, then retain the target trajectory line; if it exceeds, delete the target trajectory line.

Further, in terms of if the ratio of the absolute value of the difference between the second number of additive manufacturing points for the target trajectory line and the first number of additive manufacturing points for the target trajectory line to the first number of additive manufacturing points for the target trajectory line exceeds the preset ratio, then deleting the target trajectory, the constructing unit 602 is specifically configured to: if the ratio of the absolute value of the difference between the second number of additive manufacturing points for the target trajectory line and the first number of additive manufacturing points for the target trajectory line to the first number of additive manufacturing points for the target trajectory line exceeds the preset ratio, and a ratio of an absolute value of a difference between a second number of additive manufacturing points of a next trajectory adjacent to the target trajectory in processing sequence and a first number of additive manufacturing points of the next trajectory to the first number of additive manufacturing points of the next trajectory line does not exceed the preset ratio, then delete the target trajectory.

In a possible implementation, the display unit 603 is further configured to display a result of whether the target slice layer has a defect. When the IPC determines that the target slice layer has a defect, it displays the abnormal region in the target slice layer on the at least two trajectory amplitude maps.

It should be noted that the above units (i.e., acquiring unit 601, constructing unit 602, display unit 603, partitioning unit 604, determining unit 605, and transmitting unit 606) are configured to execute the relevant steps of the above method. For example, the acquiring unit 601 is configured to execute the relevant operations of S201, the constructing unit 602 is configured to execute the relevant operations of S202, the partitioning unit 604 is configured to execute the relevant operations of S203, and the display unit 603, determining unit 605, and transmitting unit 606 are configured to execute the relevant operations of S204. Each unit or module in the IPC 600 can be respectively or entirely combined into one or several other units or modules to form a structure, or some unit(s) or module(s) therein can be further split into multiple functionally smaller units or modules to form a structure, which can achieve the same operation without affecting the realization of the technical effects of the embodiments of the present disclosure. The above units or modules are divided based on logical functions. In practical applications, the function of one unit (or module) can also be implemented by multiple units (or modules), or the functions of multiple units (or modules) can be implemented by one unit (or module).

Based on the description of the above method embodiments and device embodiments, please refer to FIG. 7, which shows a schematic structural diagram of another IPC 700 according to an embodiment of the present disclosure. The IPC 700 shown in FIG. 7 (the IPC 700 may specifically be a computer device) includes a memory 701, a processor 702, a communication interface 703, and a bus 704. The memory 701, the processor 702, and the communication interface 703 are communicatively connected to each other via the bus 704.

The memory 701 may be a read-only memory (ROM), a static storage device, a dynamic storage device, or a random access memory (RAM).

The memory 701 may store a program. When the program stored in the memory 701 is executed by the processor 702, the processor 702 and the communication interface 703 are configured to execute the steps of the additive manufacturing quality inspection method according to the embodiments of the present disclosure.

The processor 702 may adopt a general-purpose central processing unit (CPU), a microprocessor, an application specific integrated circuit (ASIC), a graphics processing unit (GPU), or one or more integrated circuits, configured to execute relevant programs to implement the functions required to be performed by the units in the IPC 600 according to the embodiments of the present disclosure, or to execute the additive manufacturing quality inspection method according to the method embodiments of the present disclosure.

The processor 702 may also be an integrated circuit chip with signal processing capability. In the implementation process, the steps of the additive manufacturing quality inspection method of the present disclosure can be completed by hardware integrated logic circuits or instructions in the form of software in the processor 702. The above processor 702 may also be a general-purpose processor, a digital signal processor (DSP), an application specific integrated circuit (ASIC), a field programmable gate array (FPGA) or other programmable logic device, a discrete gate or transistor logic device, or a discrete hardware component. It can implement or execute the methods, steps, and logical block diagrams disclosed in the embodiments of the present disclosure. The general-purpose processor may be a microprocessor, or the processor may also be any conventional processor, etc. The steps of the method disclosed in conjunction with the embodiments of the present disclosure can be directly embodied as being executed by a hardware decoding processor, or executed by a combination of hardware and software modules in a decoding processor. The software module may be located in a mature storage medium in the art, such as random access memory, flash memory, read-only memory, programmable read-only memory, or electrically erasable programmable memory, registers, etc. The storage medium is located in the memory 701. The processor 702 reads information in the memory 701 and completes the functions required to be performed by the units included in the IPC 700 according to the embodiments of the present disclosure or executes the additive manufacturing quality inspection method according to the method embodiments of the present disclosure in combination with its hardware.

The communication interface 703 uses, for example but not limited to, a transceiver device such as a transceiver to implement communication between the IPC 700 and other devices or communication networks. For example, data can be acquired through the communication interface 703.

The bus 704 may include a path for transmitting information between various components of the IPC 700 (for example, the memory 701, the processor 702, and the communication interface 703).

It should be noted that although the IPC 700 shown in FIG. 7 only shows the memory, processor, and communication interface, in a specific implementation process, those skilled in the art should understand that the IPC 700 also includes other components necessary for normal operation. At the same time, according to specific needs, those skilled in the art should understand that the IPC 700 may also include hardware devices for implementing other additional functions. In addition, those skilled in the art should understand that the IPC 700 may also only include the devices necessary for implementing the embodiments of the present disclosure, and does not necessarily include all the devices shown in FIG. 7.

An embodiment of the present disclosure also provides a chip. The chip includes a processor and a data interface, wherein the processor reads instructions stored on a memory through the data interface to implement the additive manufacturing quality inspection method.

Optionally, as an implementation, the chip may further include a memory. The memory stores instructions, the processor is configured to execute the instructions stored on the memory, and when the instructions are executed, the processor is configured to execute the additive manufacturing quality inspection method.

An embodiment of the present disclosure further provides a computer-readable storage medium. The computer-readable storage medium stores instructions which, when run on a computer or processor, cause the computer or processor to execute one or more steps in any of the above methods.

An embodiment of the present disclosure further provides a computer program product containing instructions. When the computer program product runs on a computer or processor, the computer program product causes the computer or processor to execute one or more steps in any of the above methods.

Those skilled in the art can appreciate that the functions described in conjunction with various illustrative logical blocks, modules, and algorithm steps disclosed herein can be implemented in hardware, software, firmware, or any combination thereof. If implemented in software, the functions described in the various illustrative logical blocks, modules, and steps may be stored on or transmitted over as one or more instructions or code on a computer-readable medium and executed by a hardware-based processing unit. Computer-readable media may include computer-readable storage media, which correspond to tangible media such as data storage media, or communication media including any medium that facilitates transfer of a computer program from one place to another (e.g., based on a communication protocol). In this manner, computer-readable media may generally correspond to (1) non-transitory tangible computer-readable storage media or (2) communication media such as signals or carrier waves. Data storage media may be any available media that can be accessed by one or more computers or one or more processors to retrieve instructions, code, and/or data structures for implementing the techniques described in this disclosure. A computer program product may include a computer-readable medium.

By way of example and not limitation, such computer-readable storage media may include RAM, ROM, EEPROM, CD-ROM or other optical disk storage, magnetic disk storage or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. However, it should be understood that the computer-readable storage media and data storage media do not include connections, carrier waves, signals, or other transient media, but are actually directed to non-transitory tangible storage media. As used herein, magnetic disks and optical disks include compact disks (CD), laser disks, optical disks, digital versatile disks (DVD), and Blu-ray disks, where magnetic disks usually reproduce data magnetically, while optical disks reproduce data optically with lasers. Combinations of the above should also be included within the scope of computer-readable media.

Instructions may be executed by one or more processors, such as one or more digital signal processors (DSPs), general-purpose microprocessors, application specific integrated circuits (ASICs), field programmable logic arrays (FPGAs), or other equivalent integrated or discrete logic circuits. Accordingly, the term "processor" as used herein may refer to any of the foregoing structures or any other structure suitable for implementing the techniques described herein. Additionally, in some aspects, the functions described in the various illustrative logical blocks, modules, and steps herein may be provided within dedicated hardware and/or software modules configured for encoding and decoding, or incorporated in a combined codec. Moreover, the techniques may be fully implemented in one or more circuits or logic elements.

The techniques of this disclosure may be implemented in various apparatuses or devices, including wireless handsets, integrated circuits (ICs), or sets of ICs (e.g., chipsets). Various components, modules, or units are described in this disclosure to emphasize functional aspects of devices configured to perform the disclosed techniques, but do not necessarily require implementation by different hardware units. Rather, as described above, various units may be combined in a codec hardware unit in combination with appropriate software and/or firmware, or provided by interoperable hardware units (including one or more processors as described above).

Those skilled in the art can clearly understand that for the convenience and brevity of description, the specific working processes of the systems, devices, and units described above can refer to the specific descriptions of the corresponding steps in the foregoing method embodiments, and will not be repeated herein.

It should be understood that in the description of this disclosure, unless otherwise specified, "/" indicates an "or" relationship between the associated objects. For example, A/B may indicate A or B; wherein A and B may be singular or plural. Moreover, in the description of this application, unless otherwise specified, "multiple" means two or more. "At least one of the following" or similar expressions refer to any combination of these items, including any combination of single item (singular) or plural items (plural). For example, at least one of a, b, or c may represent: a, b, c, a-b, a-c, b-c, or a-b-c, wherein a, b, c may be single or multiple. In addition, to facilitate a clear description of the technical solutions of the embodiments of the present disclosure, in the embodiments of the present disclosure, words such as "first" and "second" are used to distinguish the same or similar items with substantially the same function and effect. Those skilled in the art can understand that words such as "first" and "second" do not limit the quantity and execution order, and words such as "first" and "second" do not necessarily limit them to being different. At the same time, in the embodiments of the present disclosure, words such as "exemplary" or "for example" are used to mean serving as an example, illustration, or explanation. Any embodiment or design scheme described as "exemplary" or "for example" in the embodiments of the present disclosure should not be construed as being more preferred or more advantageous than other embodiments or design schemes. Rather, the use of words such as "exemplary" or "for example" is intended to present related concepts in a concrete manner to facilitate understanding.

In the several embodiments provided in this disclosure, it should be understood that the disclosed systems, devices, and methods may be implemented in other ways. For example, the division of the units is only a logical function division, and there may be other division methods in actual implementation. For example, multiple units or components may be combined or integrated into another system, or some features may be ignored or not executed. The mutual coupling or direct coupling or communication connection shown or discussed may be through some interfaces, and the indirect coupling or communication connection of devices or units may be electrical, mechanical, or other forms.

The units described as separate components may or may not be physically separated, and the components displayed as units may or may not be physical units, that is, they may be located in one place or distributed on multiple network units. Some or all of the units may be selected according to actual needs to achieve the purpose of the solution of this embodiment.

In the above embodiments, they may be implemented in whole or in part by software, hardware, firmware, or any combination thereof. When implemented using software, they may be implemented in whole or in part in the form of a computer program product. The computer program product includes one or more computer instructions. When the computer program instructions are loaded and executed on a computer, the processes or functions according to the embodiments of the present disclosure are generated in whole or in part. The computer may be a general-purpose computer, a special-purpose computer, a computer network, or other programmable device. The computer instructions may be stored in a computer-readable storage medium or transmitted through the computer-readable storage medium. The computer instructions may be transmitted from one website, computer, server, or data center to another website, computer, server, or data center via wired (e.g., coaxial cable, optical fiber, digital subscriber line (DSL)) or wireless (e.g., infrared, wireless, microwave, etc.) means. The computer-readable storage medium may be any available medium that can be accessed by a computer or a data storage device such as a server, data center, etc., that includes one or more available media integrated. The available medium may be a read-only memory (ROM), a random access memory (RAM), or a magnetic medium, such as a floppy disk, hard disk, magnetic tape, magnetic disk, or an optical medium, such as a digital versatile disc (DVD), or a semiconductor medium, such as a solid-state drive (SSD), etc.

The above is only the specific implementation of the embodiments of the present disclosure, but the protection scope of the embodiments of the present disclosure is not limited thereto. Any changes or substitutions within the technical scope disclosed in the embodiments of the present disclosure should be covered within the protection scope of the embodiments of the present disclosure. Therefore, the protection scope of the embodiments of the present disclosure should be based on the protection scope of the claims.

The apparatus embodiments described above are only illustrative, where the units and modules described as separate components may or may not be physically separated. In addition, some or all of the units and modules may be selected according to actual needs to achieve the purpose of the solution of this embodiment. Those of ordinary skill in the art can understand and implement it without creative effort.

The above is only a specific implementation of the present disclosure. It should be pointed out that for those of ordinary skill in the art, improvements and modifications can be made without departing from the principle of the present disclosure, and these improvements and modifications should also be regarded as the protection scope of the present disclosure.

## Claims

1. An additive manufacturing quality inspection method, comprising:

    acquiring electrical signals corresponding to optical signals during a first period in a laser additive manufacturing process, wherein the first period is a period during which a target slice layer of a target part is processed in the laser additive manufacturing process, and the optical signals comprise at least two of: a laser emission signal from a laser device during the first period, and a laser reflection signal, a visible light signal, and an infrared light signal generated from the target slice layer during the first period;
    constructing at least two trajectory amplitude maps respectively based on at least two electrical signals corresponding to the at least two optical signals, wherein a contour of each of the at least two trajectory amplitude maps is identical to a contour of the target slice layer, the trajectory amplitude map comprises a plurality of trajectory amplitude lines, the plurality of trajectory amplitude lines correspond to processing trajectories during processing of the target slice layer, and an amplitude represented by the trajectory amplitude line is an amplitude of a corresponding electrical signal during the processing of the target slice layer;
    partitioning the at least two trajectory amplitude maps separately to obtain a plurality of first image blocks;
    performing block partitioning on the plurality of first image blocks separately to obtain a plurality of image block sets, wherein the plurality of image block sets correspond to regions in the target slice layer, each image block set of the plurality of image block sets comprises at least two second image blocks, the at least two second image blocks respectively belong to the at least two trajectory amplitude maps, and the at least two second image blocks correspond to a same region in the target slice layer; and
    determining, based on electrical signal amplitudes of the second image blocks in each image block set, whether the region corresponding to the second image blocks in each image block set in the target slice layer has a defect.

2. The method according to claim 1, wherein determining, based on the electrical signal amplitudes of the second image blocks in each image block set, whether the region corresponding to the second image blocks in each image block set in the target slice layer has a defect comprises:

    determining an inspection result corresponding to each second image block based on the electrical signal amplitude of each second image block in each image block set; and
    determining whether the region corresponding to the second image blocks in each image block set in the target slice layer has a defect based on the inspection results corresponding to the second image blocks in each image block set.

3. The method according to claim 2, wherein

    when the electrical signal amplitude of each second image block exceeds an electrical-signal threshold range corresponding to the first image block to which the second image block belongs, the inspection result corresponding to each second image block is that the region corresponding to each second image block in the target slice layer has a defect; and
    when the electrical signal amplitude of each image block does not exceed the electrical-signal threshold range corresponding to the first image block set to which the second image block belongs, the inspection result corresponding to each second image block is that the region corresponding to each second image block in the target slice layer has no defects.

4. The method according to claim 2, wherein determining the inspection result corresponding to each second image block based on the electrical signal amplitude of each second image block in each image block set comprises:

determining a ratio for each second image block, wherein the ratio for each second image block is a ratio of the electrical signal amplitude of the second image block to an electrical signal amplitude of the first image block to which the second image block belongs;

when the ratio for each second image block exceeds an electrical-signal ratio range corresponding to the first image block to which the second image block belongs, the inspection result corresponding to each second image block is that the region corresponding to each second image block in the target slice layer has a defect; and

when the ratio for each image block does not exceed the electrical-signal ratio range corresponding to the first image block set to which the second image block belongs, the inspection result corresponding to each second image block is that the region corresponding to each second image block in the target slice layer has no defects.

5. The method according to any one of claims 2-4, wherein determining whether the region corresponding to the second image blocks in each image block set in the target slice layer has a defect based on the inspection results corresponding to the second image blocks in each image block set comprises:

when inspection results corresponding to all second image blocks in a target image block set indicate that the region corresponding to the second image blocks in the target slice layer have a defect, determining that the region corresponding to the second image blocks in the target image block set in the target slice layer has a defect, wherein the target image block set is one of the plurality of image block sets.

6. The method according to claim 3 or 4, wherein determining whether the region corresponding to the second image blocks in each image block set in the target slice layer has a defect based on the inspection results corresponding to the second image blocks in each image block set comprises:

when there are a plurality of second image blocks in a target image block set whose inspection results indicate that the corresponding region in the target slice layer has a defect,

if the plurality of second image blocks comprise a second image block with a priority higher than a preset priority, then determining that the region corresponding to the second image blocks in the target image block set in the target slice layer has a defect, wherein the target image block set is one of the plurality of image block sets; and

if the plurality of second image blocks do not comprise a second image block with a priority higher than the preset priority, then when a number of the plurality of second image blocks is greater than a preset number, determining that the region corresponding to the second image blocks in the target image block set in the target slice layer has a defect.

7. The method according to claim 6, wherein a second image block A has a higher priority than a second image block B, the second image block B has a higher priority than a second image block C, and the second image block C has a higher priority than a second image block D;

wherein the second image block A belongs to a trajectory amplitude map constructed based on an electrical signal corresponding to the laser emission signal from the laser device, the second image block B belongs to a trajectory amplitude map constructed based on an electrical signal corresponding to the infrared light signal, the second image block C belongs to a trajectory amplitude map constructed based on an electrical signal corresponding to the visible light signal, and the second image block D belongs to a trajectory amplitude map constructed based on an electrical signal corresponding to the laser reflection signal.

8. The method according to any one of claims 1-7, further comprising:

acquiring one or more of: position information of an abnormal region in the target slice layer, a ratio of an area of the abnormal region in the target slice layer to an area of the target slice layer, a ratio of a total area of all abnormal regions from a first layer to the target slice layer to a total area of all slice layers from the first layer to the target slice layer, and position information corresponding to a target group, wherein the target group is a group for which a number of pieces of position information is greater than a preset number, the target group is obtained by grouping position information of all abnormal regions from the first layer to the target slice layer, and position information within a same group indicates a same position; and

transmitting to a laser processing system one or more of: the position information of the abnormal region in the target slice layer, the ratio of the area of the abnormal region in the target slice layer to the area of the target slice layer, the ratio of the total area of all abnormal regions from the first layer to the target slice layer to the total area of all slice layers from the first layer to the target slice layer, and the position information corresponding to the target group, to enable the laser processing system to re-process the abnormal region in the target slice layer based on one or more of the position information of the abnormal region in the target slice layer, the ratio of the area of the abnormal region in the target slice layer to the area of the target slice layer, and the ratio of the total area of all abnormal regions from the first layer to the target slice layer to the total area of all slice layers from the first layer to the target slice layer, and to enable the laser processing system to adjust a parameter of the laser processing system based on the position information corresponding to the target group.

9. The method according to any one of claims 1-7, further comprising:

acquiring a ratio of an area of an abnormal region in the target slice layer to an area of the target slice layer; and when the ratio of the area of the abnormal region in the target slice layer to the area of the target slice layer is greater than a first preset ratio, transmitting position information of the abnormal region in the target slice layer to a laser processing system, to enable the laser processing system to re-process the abnormal region in the target slice layer based on the position information of the abnormal region in the target slice layer; or,

acquiring position information of all abnormal regions from a first layer to the target slice layer; grouping all the position information of the abnormal regions, position information within a same group indicating a same position; and transmitting position information corresponding to a target group to the laser processing system, to enable the laser processing system to adjust a parameter of the laser processing system based on the position information corresponding to the target group, wherein the target group is a group for which the number of pieces of position information is greater than a preset number; or,

acquiring a ratio of a total area of all abnormal regions from the first layer to the target slice layer to a total area of all slice layers from the first layer to the target slice layer; and when the ratio of the total area of all abnormal regions from the first layer to the target slice layer to the total area of all slice layers from the first layer to the target slice layer is greater than a second preset ratio, and the ratio of the area of the abnormal region in the target slice layer to the area of the target slice layer is not greater than the first preset ratio, transmitting position information of all abnormal regions in the target slice layer to the laser processing system, to enable the laser processing system to re-process the abnormal regions in the target slice layer based on the position information of the abnormal regions in the target slice layer.

10. The method according to any one of claims 1-9, wherein the electrical signal amplitude of the second image block is an average electrical signal amplitude of the second image block, or is obtained by weighting electrical signal amplitudes of all points in the second image block.

11. The method according to any one of claims 1-10, wherein constructing at least two trajectory amplitude maps respectively based on the at least two electrical signals corresponding to the at least two optical signals comprises:

acquiring start and end coordinates, a laser processing speed, and a sampling rate for each trajectory line in a target trajectory amplitude map, wherein the target trajectory amplitude map is one of the at least two trajectory amplitude maps;

calculating a first number of additive manufacturing points for each trajectory line based on the start and end coordinates, the laser printing speed, and the sampling rate for the trajectory line;

acquiring a second number of additive manufacturing points for each trajectory line based on a target electrical signal, wherein the target electrical signal is an electrical signal corresponding to the target trajectory amplitude map;

for a target trajectory line in the target trajectory amplitude map, if a ratio of an absolute value of a difference between the second number of additive manufacturing points and the first number of additive manufacturing points for the target trajectory line to the first number of additive manufacturing points does not exceed a preset ratio, retaining the target trajectory line in the target trajectory amplitude map; and if the ratio exceeds the preset ratio, deleting the target trajectory line.

12. The method according to claim 11, wherein if the ratio exceeds the preset ratio, deleting the target trajectory comprises:

if the ratio exceeds the preset ratio, and a ratio of an absolute value of a difference between a second number of additive manufacturing points of a next trajectory adjacent to the target trajectory in processing sequence and a first number of additive manufacturing points of the next trajectory to the first number of additive manufacturing points of the next trajectory line does not exceed the preset ratio, then deleting the target trajectory.

13. The method according to any one of claims 1-12, further comprising:

    displaying the at least two trajectory amplitude maps, and displaying a result of whether the target slice layer has a defect; and
    based on a determination that the target slice layer has a defect, displaying the abnormal region in the target slice layer on the at least two trajectory amplitude maps.

14. An industrial PC (IPC), comprising:

    an acquiring unit configured to acquire electrical signals corresponding to optical signals during a first period in a laser additive manufacturing process, wherein the first period is a period during which a target slice layer of a target part is processed in the laser additive manufacturing process, and the optical signals comprise at least two of: a laser emission signal from a laser device during the first period, and a laser reflection signal, a visible light signal, and an infrared light signal generated from the target slice layer during the first period;
    a constructing unit configured to construct at least two trajectory amplitude maps respectively based on at least two electrical signals corresponding to the at least two optical signals, wherein a contour of each of the at least two trajectory amplitude maps is identical to a contour of the target slice layer, the trajectory amplitude map comprises a plurality of trajectory amplitude lines, the plurality of trajectory amplitude lines correspond to processing trajectories during processing of the target slice layer, and an amplitude represented by the trajectory amplitude line is an amplitude of a corresponding electrical signal during the processing of the target slice layer;
    a display unit configured to display the at least two trajectory amplitude maps;
    a partitioning unit configured to partition the at least two trajectory amplitude maps separately to obtain a plurality of first image blocks; and perform block partitioning on each of the plurality of first image blocks separately to obtain a plurality of image block sets, wherein the plurality of image block sets correspond to regions in the target slice layer, each image block set of the plurality of image block sets comprises at least two second image blocks, the at least two second image blocks respectively belong to the at least two trajectory amplitude maps, and the at least two second image blocks correspond to a same region in the target slice layer; and
    a determining unit configured to determine, based on electrical signal amplitudes of the second image blocks in each image block set, whether the region corresponding to the second image blocks in each image block set in the target slice layer has a defect;
    wherein the display unit is further configured to display, based on a determination that the target slice layer has a defect, an abnormal region in the target slice layer on the at least two trajectory amplitude maps.

15. An industrial PC (IPC), comprising a processor, wherein the processor is coupled to a memory, the memory is configured to store a computer program, and the processor is configured to execute the computer program stored in the memory to cause the IPC to perform the method according to any one of claims 1-13.

16. A laser processing control system, comprising: a laser welding system, a sensor module, a signal processing module, and an IPC, wherein the IPC is configured to perform the method according to any one of claims 1-13.

17. A computer-readable storage medium storing a computer program which, when executed by a processor, implements the method according to any one of claims 1-13.

FIG. 1

| | |
|---|---|
| IPC ACQUIRES ELECTRICAL SIGNALS CORRESPONDING TO OPTICAL SIGNALS DURING A FIRST PERIOD IN A LASER ADDITIVE MANUFACTURING PROCESS | S201 |
| IPC CONSTRUCTS AT LEAST TWO TRAJECTORY AMPLITUDE MAPS RESPECTIVELY BASED ON AT LEAST TWO ELECTRICAL SIGNALS CORRESPONDING TO THE AT LEAST TWO OPTICAL SIGNALS | S202 |
| IPC PARTITIONS THE AT LEAST TWO TRAJECTORY AMPLITUDE MAPS SEPARATELY TO OBTAIN MULTIPLE FIRST IMAGE BLOCKS; IPC PERFORMS BLOCK PARTITIONING ON EACH OF MULTIPLE FIRST IMAGE BLOCKS SEPARATELY TO OBTAIN MULTIPLE IMAGE BLOCK SETS | S203 |
| IPC DETERMINES, BASED ON ELECTRICAL SIGNAL AMPLITUDES OF THE SECOND IMAGE BLOCKS IN EACH IMAGE BLOCK SET, WHETHER A REGION CORRESPONDING TO THE SECOND IMAGE BLOCKS IN EACH IMAGE BLOCK SET IN THE TARGET SLICE LAYER IN THE TARGET SLICE LAYER HAS A DEFECT | S204 |

FIG. 2

(a)

⑤

④

③

⑥

②

①

炽

⑧

(b)

V

L1 L2 L3 L4 L5 L6 L7 L8 L9 L10 L11 L12 L13 L14 L15 L16

FIG. 3

PROCESSING
TRAJECTORY

TRAJECTORY
AMPLITUDE LINE

FIG. 4

FIG. 5a

FIG. 5b

FIG. 5c

INDUSTRIAL PC 600

ACQUIRING UNIT 601

CONSTRUCTING UNIT 602

DISPLAY UNIT 603

PARTITIONING UNIT 604

DETERMINING UNIT 605

TRANSMITTING UNIT 606

FIG. 6

INDUSTRIAL PC 700

MEMORY 701

PROCESSOR 702

BUS 704

COMMUNICATION INTERFACE 703

FIG. 7

## INTERNATIONAL SEARCH REPORT

| International application No. |
| --- |
| **PCT/CN2024/135542** |

**A. CLASSIFICATION OF SUBJECT MATTER**

G06T 7/00(2017.01)i

According to International Patent Classification (IPC) or to both national classification and IPC

**B. FIELDS SEARCHED**

Minimum documentation searched (classification system followed by classification symbols)

IPC:G06T, G06N

Documentation searched other than minimum documentation to the extent that such documents are included in the fields searched

Electronic data base consulted during the international search (name of data base and, where practicable, search terms used)

VEN, CNABS, CNTXT, USTXT, WOTXT, EPTXT, CNKI, IEEE, ISI: 增材, 打印, 切片, 电信号, 光信号, 激光, 可见光, 红外光, 轨迹, 幅值, 图像, 划分, 分块, 曲线, 阈值, 范围, 3D, additive, print, slice, electrical signal, optical signal, laser, visible light, infrared light, trajectory, amplitude, image, division, block, curve, threshold, range

**C. DOCUMENTS CONSIDERED TO BE RELEVANT**

| Category* | Citation of document, with indication, where appropriate, of the relevant passages | Relevant to claim No. |
| --- | --- | --- |
| PX | CN 117745674 A (GUANGZHOU DEQING OPTICAL TECHNOLOGY CO., LTD.) 22 March 2024 (2024-03-22) claims 1-17 | 1-17 |
| A | CN 107807568 A (CHINA ELECTRONIC PRODUCT RELIABILITY AND ENVIRONMENTAL TESTING RESEARCH INSTITUTE) 16 March 2018 (2018-03-16) description, paragraphs [0039]-[0103] | 1-17 |
| A | CN 117110295 A (GUANGZHOU DEQING OPTICAL TECHNOLOGY CO., LTD.) 24 November 2023 (2023-11-24) entire document | 1-17 |
| A | CN 110421169 A (HUAZHONG UNIVERSITY OF SCIENCE AND TECHNOLOGY) 08 November 2019 (2019-11-08) entire document | 1-17 |
| A | US 2022398716 A1 (HON HAI PRECISION INDUSTRY CO., LTD.) 15 December 2022 (2022-12-15) entire document | 1-17 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 February 2025** | **20 February 2025** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 117745674 | A | 22 March 2024 | None | | | |
| CN | 107807568 | A | 16 March 2018 | None | | | |
| CN | 117110295 | A | 24 November 2023 | None | | | |
| CN | 110421169 | A | 08 November 2019 | None | | | |
| US | 2022398716 | A1 | 15 December 2022 | CN | 115482186 | A | 16 December 2022 |

Form PCT/ISA/210 (patent family annex) (July 2022)

**EP 4 773 076 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311764353

- CN 115861187 A